# EUROPÄISCHE PATENTSCHRIFT

(11) **EP 3 858 608 B1**
(45) Veröffentlichungstag und Bekanntmachung des Hinweises auf die Patenterteilung: **16.02.2022**
(21) Anmeldenummer: 20190861.3
(22) Anmeldetag: 13.08.2020
(51) Int. Cl.: B32B 27/08, B32B 27/32, C08J 11/04

(54) **VERPACKUNGSFOLIEN AUS RECYCLING-KUNSTSTOFFEN**
PACKAGING FILMS MADE OF RECYCLING PLASTICS
FEUILLES D'EMBALLAGE DE MATIÈRES PLASTIQUES DE RECYCLAGE

(30) Priorität: 31.01.2020 DE 102020102459; 06.02.2020 DE 102020103009; 11.02.2020 DE 102020103362
(43) Veröffentlichungstag der Anmeldung: 04.08.2021
(73) Patentinhaber: KBG Kunststoff Beteiligungen GmbH, 58840 Plettenberg (DE)
(72) Erfinder: RIEKER, Frank, 59077 Hamm (DE)
(74) Vertreter: Strehlke, Ingo Kurt

(56) Entgegenhaltungen:
- DE-U1-202017 106 797

## Beschreibung

Die vorliegende Erfindung betrifft das Gebiet des Abfallrecycling, insbesondere das Recycling (Rezyklierung) von Kunststoffabfällen, insbesondere zur Herstellung von Kunststofffolien, insbesondere Verpackungsfolien, auf Basis von Kunststoffrezyklat (vorzugsweise Kunststoffrezyklat in Form von sogenanntem Post-Consumer-Kunststoffrezyklat, synonym auch als PCR-Kunststoffrezyklat bezeichnet, insbesondere Kunststoffrezyklat in Form von PCR-Recyclingfolien).

Insbesondere betrifft die vorliegende Erfindung eine mehrschichtige Kunststofffolie, insbesondere eine mehrschichtige Kunststoffverbundfolie, vorzugsweise eine mehrschichtige Kunststoffverpackungsfolie, auf Basis von Kunststoffrezyklat (Recyclingkunststoff), insbesondere auf Basis von aus Abfall stammendem Kunststoffrezyklat (vorzugsweise Kunststoffrezyklat in Form von sogenanntem Post-Consumer-Kunststoffrezyklat, synonym auch als PCR-Kunststoffrezyklat bezeichnet, insbesondere Kunststoffrezyklat in Form von PCR-Recyclingfolien).

Des Weiteren betrifft die vorliegende Erfindung die Verwendung einer mehrschichtigen Kunststofffolie gemäß der vorliegenden Erfindung zur Herstellung von Verpackungsmaterial und/oder als Verpackungsmaterial.

Schließlich betrifft die vorliegende Erfindung ein Verpackungsmaterial, welches mindestens eine mehrschichtige Kunststofffolie gemäß der vorliegenden Erfindung umfasst.

In Deutschland fallen jährlich in etwa 2,5 Millionen Tonnen Verpackungsmüll bzw. Kunststoffabfall (Plastikabfall) an, wobei ein Großteil hiervon auf Deponien gelagert wird oder in Müllverbrennungsanlagen thermisch entsorgt wird. Für die Fertigung von Produkten, welche auf Kunststoff (synonym auch als "Plastik" bezeichnet) basieren, werden hauptsächlich aus zumeist fossilen Rohstoffen (wie z. B. Erdöl, Erdgas, Kohle etc.) neu hergestellte Kunststoffe (sogenannte "Neumaterialien" oder "Primärkunststoffe") verwendet; d. h. zur Herstellung derartiger kunststoffbasierter Produkte werden üblicherweise keine Kunststoffabfälle bzw. Rezyklatkunststoffe verwendet, sondern hauptsächlich aus endlichen natürlichen Rohstoffen, wie beispielsweise Erdöl, Kohle oder Erdgas, durch chemische Syntheseverfahren hergestellte Neukunststoffe bzw. Primärkunststoffe.

Auch können Altkunststoffe nicht durch biologische Abbauprozesse oder anderweitig wieder in ihre Ausgangsstoffe umgewandelt werden, so dass durch die ständige Neuproduktion von Kunststoffen die Rohstoffvorräte der Erde maßgeblich reduziert werden, weshalb eine Wiederverwertung bzw. Recycling (Rezyklierung) einen immer größeren Stellenwert in der Gesellschaft einnimmt. Auch kann die stetig steigende Menge an Abfällen, insbesondere kunststoffbasierten Abfällen, nicht mehr ohne Weiteres gelagert oder anderweitig entsorgt werden, so dass auch durch die hierdurch bedingte Umweltbelastung eine Rezyklierung notwendig ist.

Unter dem Begriff "Recycling" bzw. "Recyclingprozessen" (synonym auch "Rezyklierung" bzw. "Rezyklierungsprozesse") werden insbesondere solche Verfahren bzw. Prozesse verstanden, bei welchen Rohstoffe aus Abfällen gewonnen werden, die wiederum in den Wirtschaftskreislauf zurückgeführt werden, insbesondere zu neuen Produkten verarbeitet werden; diese Prozesse werden auch als stoffliche Verwertung bezeichnet. Durch solche Prozesse werden die anfallenden Abfallmengen, insbesondere die andernfalls zu verbrennenden bzw. zu deponierenden Abfallmengen, maßgeblich vermindert, während gleichzeitig die endlichen Rohstoffvorräte der Erde geschont werden. In diesem Zusammenhang ist zu beachten, dass der Begriff "Recycling" die (Rück-)Gewinnung von Neurohstoffen durch tatsächlichen Abfall bezeichnet, nicht aber beispielsweise die Wiederverwendung bzw. Weiterverwendung von Produktionsresten. Insbesondere kann es sich bei dem zu rezyklierenden Kunststoffabfall beispielsweise um Folien oder Verpackungen handeln, welche z. B. schon im Drittgebrauch waren und dem Endkundennutzen zugeführt wurden.

Der Begriff der Rezyklierung (Recycling) steht also in diesem Zusammenhang insbesondere für eine Wiederverwertung oder Wiederaufbereitung und beschreibt insbesondere ein Verwertungsverfahren, durch welches kunststoffbasierte Abfälle (Kunststoffabfälle) zu Erzeugnissen, Materialien oder Stoffen entweder für den ursprünglichen Zweck oder für andere Zwecke aufbereitet werden (vgl. hierzu auch § 3 Absatz 25 des deutsches Kreislaufwirtschaftsgesetzes). Der Begriff schließt also insbesondere auch die Aufbereitung organischer Materialien ein, nicht aber die energetische Verwertung und die Aufbereitung zu Materialien, welche für die Verwendung als Brennstoff oder zu Verfüllung bestimmt sind.

Der Begriff der Rezyklate bezeichnet in diesem Zusammenhang insbesondere Sekundärstoffe als Basis für die Herstellung von (Qualitäts-)Neuprodukten, d. h. wiederverwertete Kunststoffe aus kunststoffbasierten Abfällen (Kunststoffabfällen), insbesondere aus sogenannten Post-Consumer-Abfällen.

Der Begriff der Regenerate dagegen, welcher gegenüber Rezyklaten abzugrenzen ist, bezeichnet insbesondere Materialmengen, welche aus innerbetrieblichen Produktionsabfällen stammen und, üblicherweise nach einer geeigneten Zerkleinerung, direkt wieder in den Verarbeitungsprozess zurückgeführt werden können. Derartige Materialien sind also nicht unter den Begriff der Rezyklate zu subsumieren.

Speziell das sogenannte Post-Consumer-Recycling (PCR) bezeichnet insbesondere die Wiederaufbereitung von sogenannten Post-Consumer-Abfällen, insbesondere also Kunststoffabfällen, welche bei Verbrauchern und insbesondere in Haushalten, Büros und dem stationären Handel entstehen.

Die Rezyklierung von Kunststoffabfällen wird insbesondere in Deutschland seit dem Jahr 1990 dadurch erleichtert, dass eine getrennte Abfallsammlung eingeführt wurde (duales Abfallsammel- und -verwertungssystem bzw. "Grüner Punkt"), wodurch bereits eine Vorsortierung durch den Verbraucher stattfindet. Denn zur Wiederverwendung der Abfälle in der Neuproduktion ist ein möglichst sortenreiner Abfall bzw. ein möglichst sortenreines Abfallmaterial notwendig.

Im Recyclingprozess müssen dann die trotz einer ersten Vortrennung bzw. Vorsortierung durch den Verbraucher noch sortenunreinen Abfälle weiterführend sortiert bzw. getrennt werden. Beispielsweise liegt im Fall von kunststoffbasierten Abfällen (Kunststoffabfällen) ein unbestimmtes Gemenge einer Vielzahl unterschiedlicher bzw. verschiedener Kunststoffsorten vor. In diesem Zusammenhang sind einige zum Teil automatisierte Verfahren bekannt, welche die Kunststoffabfälle entweder nach Farbe oder aber nach anderen physikalischchemischen Eigenschaften weiterführend sortieren (beispielsweise mittels Laser- oder Intrarottechnik, Dichtebestimmung etc.), um nach Möglichkeit die Sortenreinheit der jeweiligen Kunststoffsorte zu erhöhen, da zueinander inkompatible Kunststoffsorten nicht ohne Weiteres einer weiterführenden Verarbeitung zu einem neuen Wertstoff bzw. Produkt zugeführt werden können.

Zielsetzung eines derartigen Recyclingprozesses für Kunststoffabfälle ist der Erhalt von möglichst sortenreinem (d. h. kunststoffsortenreinem) Kunststoffabfallmaterial, da nur ein solches kunststoffsortenreines Kunststoffabfallmaterial zu einem hochwertigen Kunststoffrezyklat für die weitere Verarbeitung zu Kunststoffprodukten aufbereitet werden kann. Zu diesem Zweck werden die Kunststoffabfälle meist aufgeschmolzen oder gesintert, insbesondere im Rahmen von Extrusions-, Spritzgieß- , Spritzpress-, Sinterpress-, Intrusionsverfahren etc., weshalb nur miteinander kompatible, sortengleiche Kunststoffe auf diese Weise verarbeitet werden können. Der Begriff der Sortenreinheit (d. h. Kunststoffsortenreinheit) bezeichnet dabei insbesondere gleiche Kunststoffe bzw. gleiche Kunststoffsorten mit gleicher Kennzeichnung (d. h. Kennzeichnung gemäß DIN EN ISO 11469 und/oder gemäß VDA Norm 260). Die in der Norm DIN EN ISO 11469 (2017) vorgenommene (kunststoff-)sortenspezifische Identifizierung und Kennzeichnung verwendet für die Bezeichnung der jeweiligen Kunststoffsorte jeweils die Kennbuchstaben und Kurzzeichen gemäß DIN EN ISO 1043 (2016), wobei letztere die Kunststoffbasispolymere bezeichnet (z. B. PE für Polyethylen, PP für Polypropylen, PET für Polyethylenterephthalat etc.). Innerhalb einer (einzigen) Kunststoffsorte können zwar noch weiterführende Unterteilungen bzw. Unterklassifizierungen vorgenommen werden, dennoch liegt nur eine einzige Kunststoffsorte im Sinne von DIN EN ISO 11469 und/oder VDA Norm 260 vor (z.B. Unterteilung bzw. Unterklassifizierung im Fall von Polyethylen z. B. LDPE, LLDPE, HDPE etc.); Entsprechendes gilt auch für unterschiedliche Molekulargewichte innerhalb einer einzigen Kunststoffsorte.

In diesem Zusammenhang werden die durch den Verbraucher vorsortierten kunststoffbasierten Abfälle (Kunststoffabfälle) weiterführend sortiert, zerkleinert und anschließend gegebenenfalls nochmals weiterführend sortiert und gewaschen. Dann werden die möglichst sortenrein vorsortierten und gesäuberten Abfälle zu Kunststoffrezyklaten weiterverarbeitet, insbesondere in Granulier-, Extrusions-, Spritzgieß-, Spritzpress-, Sinterpress-, Intrusionsverfahren etc. Erst das auf diese Weise erhaltene Kunststoffrezyklat kann wieder in der Produktion von neuen Kunststoffprodukten verwendet werden.

Aber selbst im Fall sortenreiner Kunststoffabfälle bzw. Rezyklatkunststoffe ist eine Wiederverwendung, insbesondere bei der Herstellung neuer Kunststoffprodukte, nicht immer ohne Weiteres möglich, da die hierin noch enthaltenen Verunreinigungen (z. B. unerwünschte Geruchsstoffe, Fette und Öle, Metalle und Schwermetalle, Fremdkörper wie Holz, Papier und Pappe etc.) das herzustellende Endprodukt beeinträchtigen können.

Darüber hinaus wurde aber auch die Wiederverwendung bzw. Wiederverwertung von sortenunreinen Kunststoffen in Betracht gezogen: Beispielsweise wird in der europäischen Patentschrift EP 0 906 365 B1 ein Verfahren beschrieben, welches unsortierte Kunststoffabfälle wiederverwertet, wobei in diesem Zusammenhang ein Trägermaterial aus einem weiteren Material, wie beispielsweise Holz, Papier, Pappe, Sperrmüll etc., notwendig ist und somit insgesamt ein mehrschichtiges Produkt aus verschiedenartigen Materialien gebildet wird. Dies ist insbesondere problematisch, da derartige Mischprodukte aus verschiedenartigen Materialien nicht erneut rezykliert werden können, da eine Trennung der verschiedenartigen Materialien nicht bzw. zumindest nicht ohne Weiteres erfolgen kann; ein solches Verfahren erlaubt also nur ein einmaliges Rezyklieren von unsortierten Kunststoffabfällen, wobei ein erneutes Rezyklieren aber nicht mehr möglich ist.

In diesem Zusammenhang sind auch noch vergleichbare Verfahren bekannt, welche sortenunreine Kunststoffabfälle in Kombination mit weiteren Fremdstoffen, insbesondere Füllstoffen bzw. Trägersubstanzen, verarbeiten (vgl. z. B. DE 698 15 401 T2, EP 2 937 199 B1 und DE 37 15 646 A1), so dass -wie zuvor aufgeführt - in Bezug auf derartige Mischprodukte aus einer Vielzahl verschiedenartiger Materialien kein erneutes Rezyklieren möglich ist.

Weiterhin ist auch die Verwendung bzw. Verwertung von sortenreinen Kunststoffabfällen für die Neuproduktion (d. h. für die Produktion neuer kunststoffbasierter Produkte) bekannt, wobei in diesem Zusammenhang jedoch zumeist signifikante Mengen an Neukunststoffen zugesetzt werden müssen, um die geforderten Qualitäten zu gewährleisten, wie beispielsweise in der WO 92/15640 A1 beschrieben.

Folglich fehlt es im Stand der Technik nach wie vor an Möglichkeiten, Kunststoffabfälle derart wiederzuverwerten bzw. zu rezyklieren, dass leistungsstarke kunststoffbasierte Neumaterialien bereitgestellt bzw. hergestellt werden können, welche zumindest maßgeblich bzw. im Wesentlichen ausschließlich aus den betreffenden aus den Kunststoffabfällen gewonnenen Kunststoffrezyklaten bestehen. Weiterhin fehlt es dem Stand der Technik auch daran, solche Neukunststoffe bereitzustellen, welche maßgeblich bzw. im Wesentlichen aus Kunststoffabfällen bestehen, welche erneut rezykliert werden können, so dass ein langfristiger und nachhaltiger Wirtschaftskreislauf gebildet wird.

Daher ist es insbesondere aus wirtschaftlichen, ökologischen und gesellschaftlichen Gründen nicht nur wünschenswert, sondern vielmehr auch erforderlich, Kunststoffabfälle für die Neuproduktion von kunststoffbasierten Produkten einzusetzen, wobei in diesem Zusammenhang - um einen nachhaltigen Wirtschaftskreislauf zu ermöglichen - die Endeigenschaften der unter Verwendung von Kunststoffabfällen hergestellten Produkte sich im Vergleich zu entsprechenden aus Primärkunststoffen hergestellten Produkten zumindest im Wesentlichen nicht verschlechtern sollten.

Die DE 20 2017 106 797 U1 betrifft eine Schutzfolie zum zeitlich begrenzten Oberflächenschutz, wobei die Schutzfolie mindestens eine untere Schicht und eine obere Schicht, welche die untere Schicht bedeckt, aufweist, wobei die untere Schicht oder Schichten, welche einen Teil der Schutzfolie bilden, aus einem biobasierten Polymer mit einem prozentualen Anteil an erneuerbarem Material von mindestens 50 % bestehen.

Das der vorliegenden Erfindung zugrundeliegende Problem besteht daher in der Bereitstellung von Kunststofffolien, insbesondere Verpackungsfolien, auf Basis von Kunststoffrezyklat, wobei die zuvor geschilderten Nachteile des Standes der Technik zumindest weitestgehend vermieden oder aber wenigstens abgeschwächt werden sollen.

Insbesondere sollen solche Kunststofffolien, insbesondere Verpackungsfolien, auf Basis von Kunststoffrezyklat, bereitgestellt werden, welche zumindest im Wesentlichen aus aus Kunststoffabfällen rezyklierten Materialien (d. h. Kunststoffrezyklat) gebildet sind oder hieraus bestehen.

Insbesondere besteht eine weitere der vorliegenden Erfindung zugrundeliegende Aufgabe in der Bereitstellung von Kunststofffolien, insbesondere Verpackungsfolien, auf Basis von Kunststoffrezyklat, welche zumindest im Wesentlichen gleichwertige oder allenfalls geringfügig bzw. unmaßgeblich schlechtere Eigenschaften (z. B. mechanische und/oder optische und/oder haptische etc. Eigenschaften) aufweisen wie Kunststofffolien auf Basis von Primärkunststoffen.

Weiterhin besteht eine weitere der vorliegenden Erfindung zugrundeliegende Aufgabe insbesondere in der Bereitstellung solcher Kunststofffolien, insbesondere Verpackungsfolien, auf Basis von Kunststoffrezyklat, welche maßgeblich aus einem (einzigen bzw. einheitlichen) Material, insbesondere einer (einzigen bzw. einheitlichen) Kunststoffsorte, bestehen. Insbesondere sollen die Kunststofffolien keine Produkte aus einer Vielzahl verschiedenartiger Materialien (z. B. verschiedenartiger Kunststoffsorten) darstellen.

Zudem besteht eine weitere der vorliegenden Erfindung zugrundeliegende Aufgabe in der Bereitstellung von Kunststofffolien, insbesondere Verpackungsfolien, auf Basis von Kunststoffrezyklat, welche sich automatisiert bzw. in automatisierten Abfüll- und/oder Verpackungsanlagen (z. B. FFS- oder VFFS-Anlagen) verarbeiten lassen.

Schließlich sollen insbesondere solche Kunststofffolien, insbesondere Verpackungsfolien, auf Basis von Kunststoffrezyklat, bereitgestellt werden, welche für ein erneutes Rezyklierungsverfahren geeignet ist.

In vollkommen überraschender Weise hat die Anmelderin nunmehr herausgefunden, dass zur Lösung der zuvor geschilderten Problem- bzw. Aufgabenstellung insbesondere mehrschichtig (mehrlagig) ausgebildete Kunststofffolien, insbesondere Kunststoffverbundfolien, vorzugsweise Kunststoffverpackungsfolien, auf Basis von Kunststoffrezyklat (Recyclingkunststoff), insbesondere auf Basis von aus Abfall stammendem Kunststoffrezyklat, geeignet sind, welche aus mindestens drei miteinander verbundenen, insbesondere mittels Koextrusion verbundenen und/oder koextrudierten, Folienschichten gebildet sind und einen Kunststoffrezyklat-Anteil von mindestens 80 Gew.-%, bezogen auf die Kunststofffolie, aufweisen.

Zur Lösung des zuvor geschilderten Problems schlägt die vorliegende Erfindung daher - gemäß einem **ersten** Aspekt der vorliegenden Erfindung - eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, gemäß Anspruch 1 vor; weitere, insbesondere besondere und/oder vorteilhafte Ausgestaltungen des erfindungsgemäßen Verfahrens sind Gegenstand der diesbezüglichen Unteransprüche.

Weiterhin betrifft die vorliegende Erfindung - gemäß einem **zweiten** Aspekt der vorliegenden Erfindung - die erfindungsgemäße Verwendung einer mehrschichtigen Kunststofffolie nach der vorliegenden Erfindung zur Herstellung von Verpackungsmaterial und/oder als Verpackungsmaterial gemäß dem diesbezüglichen unabhängigen Verwendungsanspruch; weitere, insbesondere besondere und/oder vorteilhafte Ausgestaltungen dieses Erfindungsaspekts sind Gegenstand der diesbezüglichen fakultativen Merkmale des betreffenden Verwendungsanspruchs.

Gleichermaßen betrifft die vorliegende Erfindung - gemäß einem **dritten** Aspekt der vorliegenden Erfindung - ein erfindungsgemäßes, mindestens eine mehrschichtige Kunststofffolie nach der vorliegenden Erfindung umfassendes Verpackungsmaterial gemäß dem diesbezüglichen unabhängigen Anspruch; weitere, insbesondere besondere und/oder vorteilhafte Ausgestaltungen dieses Erfindungsaspekts sind Gegenstand des diesbezüglichen fakultativen Merkmale des betreffenden Anspruchs.

Es versteht sich bei den nachfolgenden Ausführungen von selbst, dass Ausgestaltungen, Ausführungsformen, Vorteile und dergleichen, welche nachfolgend zu Zwecken der Vermeidung von Wiederholungen nur zu einem Erfindungsaspekt ausgeführt sind, selbstverständlich auch in Bezug auf die übrigen Erfindungsaspekte entsprechend gelten, ohne dass dies einer gesonderten Erwähnung bedarf.

Des Weiteren versteht es sich von selbst, dass einzelne Aspekte und Ausführungsformen der vorliegenden Erfindung auch in beliebiger Kombination mit anderen Aspekten und Ausführungsformen der vorliegenden Erfindung als offenbart gelten und insbesondere auch eine beliebige Kombination von Merkmalen und Ausführungsformen, wie sie sich aus den Rückbezügen aller Patentansprüche ergibt, umfangreich als offenbart gilt, und zwar im Hinblick auf alle sich ergebenden Kombinationsmöglichkeiten.

Bei allen nachstehend genannten relativen bzw. prozentualen gewichtsbezogenen Angaben, insbesondere relativen Mengen- oder Gewichtsangaben, ist weiterhin zu beachten, dass diese im Rahmen der vorliegenden Erfindung vom Fachmann derart auszuwählen sind, dass sie sich in der Summe unter Einbeziehung aller Komponenten bzw. Inhaltsstoffe, insbesondere wie nachfolgend definiert, stets zu 100 % bzw. 100 Gew.-% ergänzen bzw. addieren; dies versteht sich aber für den Fachmann von selbst.

Im Übrigen gilt, dass der Fachmann - anwendungsbezogen oder aber einzelfallbedingt -von den nachfolgend angeführten Bereichsangaben erforderlichenfalls abweichen kann, ohne dass er den Rahmen der vorliegenden Erfindung verlässt.

Zudem gilt, dass alle im Folgenden genannten Werte- bzw. Parameterangaben oder dergleichen grundsätzlich mit genormten bzw. standardisierten oder explizit angegebenen Bestimmungsverfahren oder andernfalls mit dem Fachmann auf diesem Gebiet an sich geläufigen Bestimmungs- bzw. Messmethoden ermittelt bzw. bestimmt werden können.

Dies vorausgeschickt, wird die vorliegende Erfindung nunmehr nachfolgend im Detail erläutert.

Gegenstand der vorliegenden Erfindung - gemäß einem **ersten** Aspekt der vorliegenden Erfindung - ist somit eine mehrschichtige Kunststofffolie (1), insbesondere mehrschichtige Kunststoffverbundfolie, auf Basis von Kunststoffrezyklat (Recyclingkunststoff),
wobei die Kunststofffolie (1) einen Schichtverbund von mindestens drei miteinander verbundenen, insbesondere mittels Koextrusion verbundenen und/oder koextrudierten, Folienschichten (1a, 1b, 1c) umfasst,
wobei die Kunststofffolie (1) und/oder der Schichtverbund eine erste äußere Folienschicht (1a) und eine zweite äußere Folienschicht (1c) und eine zwischen der ersten äußeren Folienschicht (1a) und der zweiten äußeren Folienschicht (1c) angeordnete Trägerfolienschicht (1b) umfasst,
wobei die Kunststofffolie (1) einen Kunststoffrezyklat-Anteil von mindestens 80 Gew.-%, bezogen auf die Kunststofffolie (1), aufweist,
wobei die Kunststofffolie (1) zumindest im Wesentlichen nur eine einzige Kunststoffsorte gemäß DIN EN ISO 11469 aufweist, wobei die Kunststoffsorte mit einer Sortenreinheit von mindestens 90 Gew.-% vorliegt,
wobei das Verhältnis der Schichtdicken von erster äußerer Folienschicht (1a) / Trägerfolienschicht (1b) / zweiter äußerer Folienschicht (1c) im Bereich von 10 - 35 : 40 - 60 : 10 - 35 variiert,
wobei mindestens zwei der Folienschichten (1a, 1b, 1c) jeweils unterschiedliche mechanische Eigenschaften aufweisen.

Wie zuvor ausgeführt, hat die Anmelderin nämlich vollkommen überraschend herausgefunden, dass sich eine Kunststofffolie auf Basis von aus Abfall stammendem Kunststoffrezyklat mit einem Kunstoffrezyklat-Anteil von mindestens 80 Gew.-%, bezogen auf die Kunststofffolie, herstellen lässt, welche zumindest im Wesentlichen gleichwertige oder allenfalls geringfügig bzw. unmaßgeblich schlechtere Eigenschaften (z. B. mechanische bzw. optische bzw. haptische etc. Eigenschaften) wie Kunststofffolien auf Basis von Primärkunststoffen aufweist, sofern die Kunststofffolie mehrschichtig, insbesondere als Kunststoffverbundfolie, vorzugsweise als Kunststoffverpackungsfolie, welche aus mindestens drei miteinander verbundenen, insbesondere mittels Koextrusion verbundenen und/oder koextrudierten, Folienschichten gebildet ist, ausgebildet ist.

Insbesondere hat die Anmelderin überraschend herausgefunden, dass unter diesen Voraussetzungen leistungsstarke Kunststofffolien trotz des sehr hohen Kunststoffrezyklat-Anteils bereitgestellt werden können.

Insbesondere werden die erfindungsgemäßen Kunststofffolien zumindest im Wesentlichen aus aus Kunststoffabfällen rezyklierten Materialien bzw. Kunststoffrezyklat gebildet bzw. bestehen hieraus. Gleichzeitig ist es möglich die erfindungsgemäßen Kunststofffolien, insbesondere Verpackungsfolien, auf Basis von Kunststoffrezyklat, welche maßgeblich aus einem einzigen bzw. einheitlichen Kunststoffmaterial (d. h. zumindest im Wesentlichen aus einer einzigen bzw. einheitlichen Kunststoffsorte) bestehen, nach ihrer Verwendung wieder einer erneuten Rezyklierung zu unterziehen bzw. in ein erneutes Rezyklierungsverfahren einzubringen, um hieraus letztendlich wieder neues Kunststoffrezyklat zu gewinnen. Mit anderen Worten sind die erfindungsgemäßen Kunststofffolien selbst wieder rezyklierfähig bzw. recyclingfähig (recycelbar).

Der Begriff "Rezyklat" bzw. "Kunststoffrezyklat", wie er erfindungsgemäß verwendet wird, bezieht sich insbesondere auf solche Kunststoffe, welche durch Rezyklierung, d. h. insbesondere Trennung nach Kunststoffsorte, Reinigung und Zerkleinern, aus kunststoffbasierten Abfällen bereitgestellt werden. In diesem Zusammenhang können insbesondere solche Abfälle verwendet werden, wie sie beispielsweise in dem System "*Grüner Punkt*" bereits durch den Verbraucher im Haushalt vorsortiert werden und vorzugsweise im gelben Sack bzw. der gelben Tonne entsorgt werden. Diese Materialien werden meistens einem Waschprozess unterzogen (vgl. auch obige und noch nachfolgende Ausführungen).

Insbesondere kann im Rahmen der vorliegenden Erfindung als Kunststoffrezyklat insbesondere ein Kunststoffrezyklat in Form von sogenanntem Post-Consumer-Kunststoffrezyklat, synonym auch als PCR-Kunststoffrezyklat bezeichnet, insbesondere Kunststoffrezyklat in Form von PCR-Recyclingfolien, zum Einsatz kommen. Die dann erhaltene erfindungsgemäße Kunststofffolie ist folglich eine sogenannte PCR-Kunststofffolie (Post-Consumer-Recycling-Kunststofffolie).

Der Begriff der Sortenreinheit, wie er erfindungsgemäß verwendet wird, bezieht sich auf die Kunststoffsortenreinheit, d. h. der Begriff der Sortenreinheit meint erfindungsgemäß insbesondere, dass zumindest im Wesentlichen nur eine (einzige) Kunststoffsorte bzw. nur gleiche Kunststoffe/Kunststoffsorten vorliegen. In diesem Zusammenhang sind gleiche Kunststoffsorten solche Kunststoffe, welche die gleiche Kennzeichnung gemäß DIN EN ISO 11469 und/oder VDA-Norm 260 aufweisen (wobei in der Norm DIN EN ISO 11469 (2017) die kunststoffsortenspezifische Identifizierung und Kennzeichnung für die Bezeichnung der jeweiligen Kunststoffsorten auf den Kennbuchstaben bzw. Kurzzeichen gemäß DIN EN ISO 1043 (2016) basiert). In der DIN EN ISO 1043 werden die Kunststoffbasispolymere mit Kennbuchstaben bzw. Kurzzeichen bezeichnet (z. B. PE für Polyethylen, PP für Polypropylen, PET für Polyethylenterephthalat etc.); dabei können zwar in diesem Zusammenhang die Kunststoffsorten noch einer weiterführenden Unterteilung bzw. Unterklassifizierung (z. B. Unterteilung bzw. Unterklassifizierung nach Dichte, Vernetzung, Molekulargewicht etc.) unterliegen, entsprechen aber trotzdem einer einzigen Kunststoffsorte im Sinne von DIN EN ISO 11469 bzw. VDA-Norm 260 und somit im Sinne der vorliegenden Erfindung.

Durch den besonders hohen Rezyklat-Anteil der erfindungsgemäßen Kunststofffolien von mindestens 80 Gew.-% sind diese Kunststofffolien besonders rohstoff- bzw. ressourcenschonend, da Abfallmaterialien verwendet und auf dieser Weise einer neuen Wertschöpfung zugeführt werden und folglich gerade keine bzw. nur sehr geringe Mengen an neuen Rohstoffen aus fossilen Ausgangsmaterialien bzw. -rohstoffen (z. B. Erdöl, Kohle, Erdgas etc.) gewonnen werden müssen. Zudem liegt in diesem Zusammenhang eine hohe Energieeffizienz in Bezug auf die Verwendung von Rohstoffen vor, insbesondere da die entsprechenden Kunststoffe nicht aus den entsprechenden fossilen Ausgangsmaterialien/-rohstoffen als sogenannte Primärkunststoffe (neu) hergestellt werden müssen, sondern bereits vorhandene Kunststoffmaterialien entsprechend ihrer Kunststoffsorte sortiert bzw. (auf)getrennt und aufgereinigt werden, um dann nach weiterführender Aufbereitung (z. B. Zerkleinerung, Verarbeitung zu Granulaten etc.) als Kunststoffrezyklat wiederverwendet werden zu können. Insgesamt liegt daher in Bezug auf die erfindungsgemäßen Kunststofffolien eine hohe Umweltkompatibilität vor, insbesondere eine hohe Kompatibilität in Bezug auf den Umweltschutz insbesondere durch Ressourcen- bzw. Rohstoffeinsparungen bzw. durch Ressourcen- und Rohstoffmanagement.

In vollkommen überraschender Weise hat die Anmelderin herausgefunden, dass die Kunststofffolien gemäß der vorliegenden Erfindung trotz eines Rezyklat-Anteils von mindestens 80 Gew.-% im Vergleich zu "neuen" Kunststofffolien (d. h. im Vergleich zu aus Primärkunststoffen hergestellten Kunststofffolien) wenigstens gleichartige bzw. vergleichbare Leistungseigenschaften aufweisen, nämlich vor allem gleichartige bzw. vergleichbare mechanische Eigenschaften, darüber hinaus aber auch gleichartige bzw. vergleichbare weitere Eigenschaften, wie z. B. optische Eigenschaften, Verarbeitungseigenschaften wie Bedruckbarkeit, Versiegelbarkeit bzw. Siegelfähigkeit etc., Verarbeitungsfähigkeit zu Verpackungen, Schläuchen, Beuteln, Tüten, Säcken etc., Verarbeitungsfähigkeit in automatisierten Abfüll- und/oder Verpackungsanlagen, insbesondere FFS- oder VFFS-Anlagen, etc.

Weiterhin sind die erfindungsgemäßen Kunststofffolien auf Basis von Kunststoffrezyklat mit einem Anteil von mindestens 80 Gew.-% gleichzeitig zumindest im Wesentlichen preisgleich zu "neuen" Kunststofffolien (d. h. Kunststofffolien, welche unter Verwendung von Kunststoffprimärmaterialien hergestellt werden).

Gleichermaßen tragen die erfindungsgemäßen Kunststofffolien auch dazu bei, die anfallenden und ansonsten zu entsorgenden Mengen an Kunststoffabfall zu reduzieren und den Kunststoffabfall einer ökonomisch wie ökologisch effizienten und kompatiblen Neuverwertung bzw. Neuverwendung zuzuführen.

Darüber hinaus weisen die erfindungsgemäßen Kunststofffolien nicht nur gleichartige bzw. vergleichbare Leistungseigenschaften wie Primärkunststofffolien auf, sondern sind darüber hinaus nach ihrer Verwendung auch erneut rezyklierbar, wodurch eine Kreislauffahrweise möglich ist. Durch eine solche Kreislauffahrweise wird die Umweltkompatibilität der erfindungsgemäßen Kunststofffolien weiterführend gesteigert, insbesondere ist eine langanhaltende Verwertung bzw. Verwendung der zugrundeliegenden Materialien ohne bzw. nur durch minimale Zugabe an Neu- bzw. Primärkunststoffen möglich, so dass fossile Ausgangsmaterialien (d. h. die endlichen Rohstoffvorräte) nachhaltig geschützt bzw. geschont werden können.

In vollkommen überraschender Weise hat die Anmelderin herausgefunden, dass die erfindungsgemäße Kunststofffolie auf Basis von mindestens 80 Gew.-% Kunststoffrezyklat durch die Ausbildung in Form eines Schichtverbundes bzw. als Schichtverbund im Vergleich zu entsprechenden einschichtigen Folien (Monofolien) maßgeblich verbesserte Eigenschaften, insbesondere bezüglich Anwendung, Anpassbarkeit und der mechanischen Eigenschaften, aufweist.

In diesem Zusammenhang können die unterschiedlichen Schichten der mehrschichtig ausgebildeten erfindungsgemäßen Kunststofffolie - obwohl die einzelnen Schichten jeweils auf einer gleichen Kunststoffrezyklatsorte basieren - mit unterschiedlichen Eigenschaften ausgerüstet werden (vgl. noch nachfolgende Ausführungen). Durch die unterschiedlichen Eigenschaften der einzelnen Schichten der mehrschichtig ausgebildeten erfindungsgemäßen Kunststofffolie ist insgesamt eine Anpassbarkeit bzw. ein Maßschneidern der Gesamteigenschaften der mehrschichtigen Kunststofffolie (beispielsweise der optischen Eigenschaften durch Einfärbung und/oder Homogenisierung über den Folienverbund, oder mechanischen Eigenschaften, der Siegelfähigkeit bzw. Versiegelbarkeit etc.) möglich, da die einzelnen Schichten mit unterschiedlichen Eigenschaften (z. B. mit unterschiedlichen Dicken, unterschiedlichen Inhaltsstoffen, wie Additiven, Pigmenten etc.) ausgebildet werden können und die einzelnen Schichten auf diese Weise jeweils einen unterschiedlichen Beitrag innerhalb des Schichtverbundes leisten können.

Weiterhin ist es durch die Ausbildung der erfindungsgemäßen Kunststofffolien in Form eines Schichtverbundes möglich, dass die beiden Außenseiten unterschiedlich eingefärbt sind, was abhängig von der gewünschten Anwendung bzw. Verwendung vorteilhaft ist. Auch ist es beispielsweise möglich, die beiden Außenseiten mit unterschiedlichen Oberflächeneigenschaften, z. B. Rauhigkeiten, auszurüsten (z. B. Bedruckbarkeit an einer Außenseite, Antihaftschutz an der anderen Außenseite etc.).

In diesem Zusammenhang können insbesondere im Fall von opaken Folien verbesserte optische Eigenschaften bereitgestellt werden, da Inhomogenitäten, welche beispielsweise durch im Kunststoffrezyklat verbliebene Verunreinigungen (z. B. Fremdstoffe, wie Metallpartikel, Holzpartikel, Öle, Kunststoffpartikel etc.) vorliegen können, über die verschiedenen Schichten vergleichmäßigt bzw. nivelliert bzw. ausgeglichen werden können. Diese Vergleichmäßigung bzw. Nivellierung kann unter anderem durch unterschiedliche Farbpigmente in den einzelnen bzw. verschiedenen Schichten erfolgen. Weiterhin können auch verbesserte Opazitätsgrade erreicht werden, was insbesondere zur Verhinderung von Algen- und Keimbildung im Fall verpackter organischer Materialien maßgeblich bzw. notwendig sein kann, oder aber es kann auf diese Weise ein verbesserter Sichtschutz für Verpackungsgüter bereitgestellt werden.

Darüber hinaus hat die Anmelderin überraschend festgestellt, dass durch den mehrschichtigen Aufbau, insbesondere mit unterschiedlichen Eigenschaften und/oder unterschiedlichen weiteren Inhaltsstoffen bzw. Additiven in den jeweiligen einzelnen Schichten, eine verbesserte Unterdrückung von unerwünschter Migration der Inhaltsstoffe (z. B. von UV-Stabilisatoren) oder von Verunreinigungen möglich ist.

Darüber hinaus ist es auch möglich, nur eine bestimmte Schicht mit notwendigen Additiven auszustatten, wie beispielsweise im Fall von Schlauchfolien, bei welchen nur die Innenseite mit einem Antihaftmittel oder Antiblockiermittel, wie beispielsweise Kreide, ausgestattet werden kann, um ein Blockieren oder Zusammenhaften der aufeinanderliegenden Innenschichten effizient zu verhindern.

Insgesamt können durch die Ausbildung der erfindungsgemäßen Kunststofffolie in Form eines Schichtverbundes bei identischer Gesamtschichtdicke im Vergleich zu entsprechenden Monoschichten (d. h. insbesondere Monoschichten auf Basis von Kunststoffrezyklat) verbesserte mechanische Eigenschaften, insbesondere bessere Stabilität, Zugfestigkeit, Reißdehnung, Durchstoßfestigkeit etc., und/oder verbesserte optische Eigenschaften und/oder verbesserte weitere Eigenschaften erzielt werden. Darüber hinaus ist die als Schichtverbund ausgebildete erfindungsgemäße Kunststofffolie im Vergleich zu entsprechenden Monofolien besser anpassbar bzw. maßschneiderbar in Bezug auf die benötigten oder gewünschten Gesamteigenschaften bzw. Anwendungseigenschaften der Kunststofffolie.

Darüber hinaus zeichnet sich die vorliegende Erfindung durch weitere Vorteile aus, wie nachfolgend angeführt:
Insbesondere führt der hohe Rezyklat-Anteil, insbesondere mit hoher eigenständiger Sortenreinheit, der erfindungsgemäßen Kunststofffolie zu einer besonders guten eigenständigen Rezyklierbarkeit.

Die erfindungsgemäße mehrschichtige Kunststofffolie kann universell verarbeitet werden, insbesondere kann die mehrschichtige Kunststofffolie als Flachfolie ausgebildet und verwendet werden und bei Bedarf beispielsweise zu Rollenware für den Transport und/oder die Verarbeitung, beispielsweise in der Verpackungsindustrie, aufgewickelt werden. Darüber hinaus kann die erfindungsgemäße mehrschichtige Kunststofffolie aber auch zu einer Halbschlauchfolie oder Schlauchfolie oder aber in Form von Beuteln, Tüten etc. verarbeitet bzw. ausgebildet werden.

Darüber hinaus kann die erfindungsgemäße mehrschichtige Kunststofffolie auch universell verwendet werden. Insbesondere geeignet ist die erfindungsgemäße mehrschichtige Kunststofffolie als Verpackungsmaterial im Nichtlebensmittelbereich (Non-Food-Bereich), insbesondere für industrielle Verpackungen beispielsweise von Schüttgütern, (Pflanz-)Erden, Düngern, Mulch, Humus etc., Waschmitteln, Klebstoffen, Pellets und Granulaten, Haushaltsgütern und -waren oder aber für Hygieneanwendungen. In diesem Zusammenhang ist die erfindungsgemäße mehrschichtige Kunststofffolie für die Verarbeitung in bekannten und üblichen industriellen und automatisierten Abfüll- und/oder Verpackungsanlagen (z. B. FFS- oder VFFS-Anlagen) geeignet, so dass keine Umrüstung für die Verwendung der erfindungsgemäßen Kunststofffolien erforderlich ist.

Insbesondere können mit der vorliegenden Erfindung erstmals Kunststofffolien, insbesondere Verpackungsfolien, auf Basis von Kunststoffrezyklat bereitgestellt werden, welche sich ohne Weiteres automatisiert bzw. in automatisierten Abfüll- und/oder Verpackungsanlagen verarbeiten lassen (z. B. in sogenannten FFS- oder VFFS-Anlagen [d. h. Form-Fill-Seal-Anlagen bzw. vertikale Form-Fill-Seal-Anlagen]).

Weiterhin sind, wie zuvor ausgeführt, die Eigenschaften der erfindungsgemäßen mehrschichtigen Kunststofffolie einfach und effizient anpassbar bzw. maßschneiderbar.

Insbesondere weisen die erfindungsgemäßen mehrschichtigen Kunststofffolien sehr gute Folieneigenschaften, insbesondere gute mechanische, optische, haptische und sonstige Eigenschaften auf.

Darüber hinaus sind die erfindungsgemäßen Kunststofffolien kompatibel in Bezug auf andere Kunststoffe, z. B. zum Verbinden mit anderen Kunststoffen.

Die erfindungsgemäße mehrschichtige Kunststofffolie ist im Rahmen von üblichen Veredelungsverfahren, wie beispielsweise Bedruckung, Beschichtung etc., weiterführend verarbeitbar.

Insgesamt können somit im Rahmen der vorliegenden Erfindung Kunststofffolien bereitgestellt werden, welche aus kunststoffbasierten Abfallstoffen gebildet werden und somit wieder ein für den Wirtschaftskreislauf werthaltiges und somit nachhaltiges Produkt unter Ressourcenschonung ausbilden, welches selbst wieder eine hohe Umweltkompatibilität aufweist, da es eigenständig rezyklierbar bzw. rezyklierfähig ist.

Nachfolgend werden bevorzugte Ausgestaltungen der erfindungsgemäßen Kunststofffolie näher beschrieben und erläutert:
Wie zuvor ausgeführt, ist die Kunststofffolie nach der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, wobei die Kunststofffolie einen Schichtverbund von mindestens drei miteinander verbundenen, insbesondere mittels Koextrusion verbundenen und/oder koextrudierten, Folienschichten umfasst, wobei die Kunststofffolie und/oder der Schichtverbund eine erste äußere Folienschicht und eine zweite äußere Folienschicht und eine zwischen der ersten äußeren Folienschicht und der zweiten äußeren Folienschicht angeordnete Trägerfolienschicht umfasst, wobei die Kunststofffolie einen Kunststoffrezyklat-Anteil von mindestens 80 Gew.-%, bezogen auf die Kunststofffolie, aufweist, wobei die Kunststofffolie zumindest im Wesentlichen nur eine einzige Kunststoffsorte gemäß DIN EN ISO 11469 aufweist, wobei die Kunststoffsorte mit einer Sortenreinheit von mindestens 90 Gew.-% vorliegt, wobei das Verhältnis der Schichtdicken von erster äußerer Folienschicht/Trägerfolienschicht/zweiter äußerer Folienschicht im Bereich von 10 - 35 : 40 - 60 : 10 - 35 variiert, wobei mindestens zwei der Folienschichten jeweils unterschiedliche mechanische Eigenschaften aufweisen.

Gemäß der vorliegenden Erfindung weist das Kunststoffrezyklat der erfindungsgemäßen Kunststofffolie eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf das Kunststoffrezyklat, auf.

In Bezug auf den zuvor und nachfolgend genannten Begriff der Sortenreinheit bzw. Kunststoffsortenreinheit, bezeichnet dieser insbesondere gleiche Kunststoffe bzw. gleiche Kunststoffsorten mit gleicher Kennzeichnung (d. h. Kennzeichnung gemäß DIN EN ISO 11469 und/oder gemäß VDA Norm 260). Die in der Norm DIN EN ISO 11469 (2017) vorgenommene (kunststoff-)sortenspezifische Identifizierung und Kennzeichnung verwendet für die Bezeichnung der jeweiligen Kunststoffsorte die Kennbuchstaben und Kurzzeichen gemäß DIN EN ISO 1043 (2016), wobei letztere die Kunststoffbasispolymere bezeichnet (z. B. PE für Polyethylen, PP für Polypropylen, PET für Polyethylenterephthalat etc.). Innerhalb einer (einzigen) Kunststoffsorte können zwar noch weiterführende Unterteilungen bzw. Unterklassifizierungen vorgenommen werden, dennoch liegt nur eine einzige Kunststoffsorte im Sinne von DIN EN ISO 11469 und/oder VDA Norm 260 vor (z. B. Unterteilung bzw. Unterklassifizierung im Fall von Polyethylen z. B. LDPE, LLDPE, HDPE etc.). Auch liegt im Sinne von DIN EN ISO 11469 und/oder VDA Norm 260 eine (einzige) Kunststoffsorte bei unterschiedlichen Molekulargewichten innerhalb einer zuvor definierten Kunststoffsorte vor.

Gemäß der vorliegenden Erfindung ist das Kunststoffrezyklat der erfindungsgemäßen Kunststofffolie zumindest im Wesentlichen (kunststoff-)-sortenrein ausgebildet. Insbesondere weist das Kunststoffrezyklat eine (Kunststoff-)Sortenreinheit, insbesondere Sortenreinheit der Kunststoffsorte gemäß DIN EN ISO 11469, von mindestens 90 Gew.-%, insbesondere mindestens 95 Gew.-%, bezogen auf das Kunststoffrezyklat, auf.

Es ist erfindungsgemäß vorgesehen, dass das Kunststoffrezyklat der erfindungsgemäßen Kunststofffolie zumindest im Wesentlichen nur eine (einzige) Kunststoffsorte, insbesondere nur eine (einzige) Kunststoffsorte gemäß DIN EN ISO 11469, aufweist. Insbesondere liegt die Kunststoffsorte mit einer (Sorten-)Reinheit von mindestens 90 Gew.-%, insbesondere mindestens 95 Gew.-%, bezogen auf das Kunststoffrezyklat, vor.

Darüber hinaus ist es erfindungsgemäß vorgesehen, dass das Kunststoffrezyklat der erfindungsgemäßen Kunststofffolie zumindest im Wesentlichen nur sortenreinen Kunststoff aufweist; insbesondere kann dabei die (Kunststoff-)Sortenreinheit, insbesondere die Sortenreinheit der Kunststoffsorte gemäß DIN EN ISO 11469, mindestens 90 Gew.-%, insbesondere mindestens 95 Gew.-%, bezogen auf das Kunststoffrezyklat, betragen.

Durch die Verwendung von sortenreinem Kunststoffrezyklat für die Herstellung der erfindungsgemäßen Kunststofffolie eignet sich die Kunststofffolie für die erneute Rezyklierung und kann wieder zu neuem Kunststoffrezyklat und anschließend zu neuen kunststoffbasierten Produkten verarbeitet werden.

In diesem Zusammenhang ist es gemäß der Erfindung daher vorgesehen, dass auch die erfindungsgemäße Kunststofffolie sortenrein vorliegt.

Erfindungsgemäß weist die erfindungsgemäße Kunststofffolie eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der Kunststofffolie, auf.

Erfindungsgemäß ist die erfindungsgemäße Kunststofffolie zumindest im Wesentlichen (kunststoff-) sortenrein ausgebildet ist. Erfindungsgemäß weist dabei die Kunststofffolie eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der Kunststofffolie, auf.

Die erfindungsgemäße Kunststofffolie weist zumindest im Wesentlichen nur eine einzige Kunststoffsorte gemäß DIN EN ISO 11469 auf. Die Kunststoffsorte liegt mit einer (Sorten-)Reinheit von mindestens 90 Gew.-%, insbesondere mindestens 95 Gew.-%, bezogen auf den Kunststoff(anteil) der Kunststofffolie, vor.

Erfindungsgemäß weist die erfindungsgemäße Kunststofffolie zumindest im Wesentlichen nur sortenreinen Kunststoff auf. Erfindungsgemäß beträgt die (Kunststoff-) Sortenreinheit, insbesondere die Sortenreinheit der Kunststoffsorte gemäß DIN EN ISO 11469, mindestens 90 Gew.-%, insbesondere mindestens 95 Gew.-%, bezogen auf den Kunststoff(anteil) der Kunststofffolie.

Da die gesamte erfindungsgemäße Kunststofffolie zumindest im Wesentlichen aus sortenreinem Kunststoff besteht bzw. zumindest im Wesentlichen nur sortenreinen Kunststoff aufweist, eignet sich die erfindungsgemäße Kunststofffolie nach ihrer Verwendung für die Rezyklierung, sodass ein nachhaltiger Wirtschaftskreislauf gebildet wird, die anfallenden und zu entsorgenden Abfallmengen reduziert werden und der Umweltschutz sowie das Ressourcenmanagement der Erde unterstützt werden.

Darüber hinaus ist es im Rahmen der vorliegenden Erfindung vorgesehen, dass die erfindungsgemäße Kunststofffolie nur Kunststoffrezyklat(e) einer (einzigen) Kunststoffsorte, insbesondere Kunststoffrezyklat(e) einer (einzigen) Kunststoffsorte gemäß DIN EN ISO 11469, aufweist.

In diesem Zusammenhang ist es bevorzugt, wenn die erfindungsgemäße Kunststofffolie außer dem Kunststoffrezyklat zumindest im Wesentlichen nur Inhaltsstoffe aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Primärkunststoffen der gleichen Kunststoffsorte gemäß DIN EN ISO 11469 wie das Kunststoffrezyklat, Hilfsstoffen und Additiven sowie deren Mischungen und Kombinationen aufweist.

Insbesondere ist es gemäß der vorliegenden Erfindung vorgesehen, dass die erfindungsgemäße Kunststofffolie kein andersartiges und/oder weiteres und/oder zusätzliches Kunststoffrezyklat aufweist.

In diesem Zusammenhang wird im Rahmen der vorliegenden Erfindung nur Kunststoffrezyklat einer Kunststoffsorte, wie zuvor definiert, eingesetzt, wobei Kunststoffrezyklate aus verschiedenen Chargen eingesetzt werden können, solange es sich um eine (einzige) Kunststoffsorte, insbesondere um eine (einzige) Kunststoffsorte gemäß DIN EN ISO 11469, handelt.

Insbesondere ist es erfindungsgemäß vorgesehen, dass die Kunststofffolie keine andersartige und/oder weitere und/oder zusätzliche Kunststoffsorte, insbesondere keine andersartige und/oder weitere und/oder zusätzliche Kunststoffsorte gemäß DIN EN ISO 11469, aufweist.

Insgesamt wird daher eine Kunststofffolie bereitgestellt werden, welche zumindest im Wesentlichen aus einer einzigen Kunststoffsorte besteht und sich somit - unter anderem aus diesem Grund - besonders gut für eine erneute Rezyklierung eignet.

Erfindungsgemäß kann es vorgesehen sein, dass die erfindungsgemäße Kunststofffolie einen (Gesamt-)Kunststoffanteil im Bereich von 80 Gew.-% bis 99,9 Gew.-%, insbesondere im Bereich von 82,5 Gew.-% bis 99,8 Gew.-%, vorzugsweise im Bereich von 85 Gew.-% bis 99,8 Gew.-%, bezogen auf die Kunststofffolie, aufweist.

In diesem Zusammenhang bezieht sich der (Gesamt-)Kuststoffanteil sowohl auf das Kunststoffrezyklat als auch auf gegebenenfalls vorhandene Primärkunststoffe der gleichen Kunststoffsorte gemäß DIN EN ISO 11469 wie das verwendete Kunststoffrezyklat. Insgesamt besteht die erfindungsgemäße Kunststofffolie gemäß dieser Ausführungsform im Wesentlichen aus Kunststoff, wobei nur ein geringer Anteil an weiteren Stoffen, abhängig von dem Anwendungsbereich und den entsprechenden Anforderungen, in der Kunststofffolie enthalten ist (wobei diese weiteren Stoffe keinen Kunststoff umfassen, welcher nicht der gleichen Sorte wie das Kunststoffrezyklat entspricht).

Im Rahmen der vorliegenden Erfindung kann die erfindungsgemäße Kunststofffolie insbesondere Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Hilfsstoffen und Additiven sowie deren Mischungen und Kombinationen, vorzugsweise in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%, bezogen auf die Kunststofffolie, aufweisen.

Durch die Zugabe von solchen weiteren Inhaltsstoffen - zusätzlich zu dem Kunststoffrezyklat und gegebenenfalls vorhandenem Primärkunststoff derselben Kunststoffsorte - können die Eigenschaften, insbesondere die mechanischen, optischen, haptischen etc. Eigenschaften, angepasst bzw. eingestellt werden. Die Kunststofffolie kann somit für ihre entsprechende Verwendung bzw. Anwendung maßgeschneidert werden.

Gemäß einer besonderen Ausführungsform der vorliegenden Erfindung kann es vorgesehen sein, dass die Kunststofffolie
- Kunststoffrezyklat in Mengen im Bereich von 80 Gew.-% bis 97 Gew.-%, insbesondere in Mengen im Bereich von 82 Gew.-% bis 96 Gew.-%, vorzugsweise in Mengen im Bereich von 84 Gew.-% bis 95 Gew.-%;
- gegebenenfalls Primärkunststoff(e) der gleichen Kunststoffsorte gemäß DIN EN ISO 11469 wie das Kunststoffrezyklat, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%;
- Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Hilfsstoffen und Additiven sowie deren Mischungen und Kombinationen, in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%;
aufweist oder hieraus besteht, wobei die vorstehenden Gewichtsprozentangaben jeweils auf die Kunststofffolie bezogen sind und derart zu kombinieren und/oder auszuwählen sind, dass 100 Gew.-% resultieren.

Kunststofffolien mit diesen Inhaltsstoffen in den entsprechenden Mengen eignen sich besonders gut als Verpackungsmaterial und sind darüber hinaus für eine anschließende erneute Rezyklierung geeignet.

Die Schichtdicke der erfindungsgemäßen Kunststofffolie kann in breiten Bereichen variieren:
Insbesondere kann die erfindungsgemäße Kunststofffolie eine Schichtdicke im Bereich von 10 µm bis 300 µm, insbesondere im Bereich von 15 µm bis 200 µm, bevorzugt im Bereich von 20 µm bis 180 µm, besonders bevorzugt im Bereich von 25 µm bis 175 µm, aufweisen.

Weiterhin kann die erfindungsgemäße Kunststofffolie eine Schichtdicke von mindestens 10 µm, insbesondere mindestens 15 µm, bevorzugt mindestens 20 µm, besonders bevorzugt mindestens 25 µm, aufweisen.

Darüber hinaus kann die erfindungsgemäße Kunststofffolie eine Schichtdicke von bis zu 300 µm, insbesondere bis zu 200 µm, bevorzugt bis zu 180 µm, besonders bevorzugt bis zu 175 µm, aufweisen.

Die Schichtdicke der erfindungsgemäßen Kunststofffolie kann in breiten Bereichen variieren und ist daher besonders gut an ihre entsprechende Anwendung anpassbar. Insbesondere sind die mechanischen Eigenschaften, wie beispielsweise Zugfestigkeit, Reißdehnung und dynamische Durchstoßfestigkeit, abhängig von der entsprechenden Schichtdicke. Darüber hinaus verändern sich aber auch die Verarbeitbarkeit und die Stabilität mit der Schichtdicke. Insbesondere bei der Verwendung der erfindungsgemäßen Kunststofffolie als Verpackungsmaterial können unterschiedliche Anforderungen (je nach zu verpackendem Gut bzw. zu verpackender Ware) vorliegen, sodass die Kunststofffolie entsprechend ihrem Einsatz angepasst werden muss.

Gemäß einer besonderen Ausführungsform der vorliegenden Erfindung kann es vorgesehen sein, dass die Schichtdicke der Trägerfolienschicht 35 % bis 65 %, insbesondere 40 % bis 60 %, bevorzugt 45 % bis 55 %, besonders bevorzugt etwa 50 %, der (Gesamt-)Schichtdicke der erfindungsgemäßen Kunststofffolie beträgt.

Auch kann es gemäß einer besonderen Ausführungsform der vorliegenden Erfindung vorgesehen sein, dass die (summierten) Schichtdicken der äußeren Folienschichten 35 % bis 65 %, insbesondere 40 % der 60 %, bevorzugt 45 % bis 55 %, besonders bevorzugt etwa 50 %, der (Gesamt-)Schichtdicke der erfindungsgemäßen Kunststofffolie betragen.

Die Trägerfolienschicht verleiht der erfindungsgemäßen mehrschichtigen Kunststofffolie maßgeblich ihre Stabilität, während die äußeren Folienschichten der erfindungsgemäßen mehrschichtigen Kunststofffolie maßgeblich die optischen Eigenschaften, Haftung und Reibung, Haptik sowie die Veredelbarkeit, insbesondere Bedruckbarkeit und Beschichtbarkeit, bestimmen. Die spezifische Kombination von Trägerfolienschicht und den beiden äußeren Folienschichten bestimmt die Dichtigkeit und Gleichmäßigkeit der Folie insgesamt. Durch die Anpassung der Schichtdickenanteile in der Kunststofffolie können die Endeigenschaften, insbesondere optische Eigenschaften, Haftung und Reibung, Haptik, Bedruckbarkeit, Dichtigkeit, Gleichmäßigkeit sowie die Stabilität maßgeschneidert werden und entsprechend der Anwendung eingestellt werden.

In diesem Zusammenhang ist es erfindungsgemäß vorgesehen, dass das Verhältnis der Schichtdicken von erster äußerer Folienschicht / Trägerfolienschicht / zweiter äußerer Folienschicht im Bereich von 10 - 35 : 40 - 60 : 10 - 35, insbesondere im Bereich von 15 - 30 : 45 - 55 : 15 - 30, variiert.

Gemäß einer besonderen Ausführungsform der vorliegenden Erfindung kann es vorgesehen sein, dass die einzelnen Folienschichten der erfindungsgemäßen Kunststofffolie jeweils einen Kunststoffrezyklat-Anteil von mindestens 80 Gew.-%, bezogen auf die jeweilige Folienschicht, aufweisen.

Somit sollte nicht nur die Kunststofffolie als Ganzes bzw. insgesamt einen Kunststoffrezyklat-Anteil von mindestens 80 Gew.-% aufweisen, sondern auch jeweils die einzelnen Kunststoffschichten. Es basieren also sowohl die die Kunststofffolie ausbildenden Folienschichten als auch die gesamte Kunststofffolie zumindest im Wesentlichen (d. h. wenigstens zu 80 % bzw. 80 Gew.-%) auf Kunststoffrezyklat. Es ist also nicht erforderlich, eine oder mehrere Schichten aus Primärkunststoff in die erfindungsgemäße Kunststofffolie zu integrieren, um im Wesentlichen gleichwertige bzw. vergleichbare Eigenschaften (z.B. mechanische und/oder optische und/oder haptische etc. Eigenschaften) wie im Fall von Kunststofffolien auf Basis von Primärkunststoffen zu erreichen.

Weiterhin ist es erfindungsgemäß vorgesehen, dass die einzelnen Folienschichten der erfindungsgemäßen Kunststofffolie jeweils ein in Bezug auf den das Kunststoffrezyklat ausbildenden Kunststoff gleiches und/oder gleichartiges Kunststoffrezyklat, insbesondere bezogen auf die das Kunststoffrezyklat ausbildende Kunststoffsorte gemäß DIN EN ISO 11469, aufweisen.

In diesem Zusammenhang ist es gleichermaßen erfindungsgemäß vorgesehen, dass die einzelnen Folienschichten der erfindungsgemäßen Kunststofffolie jeweils eine in Bezug auf den das Kunststoffrezyklat ausbildenden Kunststoff gleiche und/oder gleichartige Kunststoffsorte, insbesondere gemäß DIN EN ISO 11469, aufweisen.

Die einzelnen Folienschichten der erfindungsgemäßen Kunststofffolie sind somit sortenrein und von daher auch für die erneute Rezyklierung geeignet.

Weiterhin ist es diesbezüglich auch erfindungsgemäße vorgesehen, dass die einzelnen Folienschichten der erfindungsgemäßen Kunststofffolie jeweils eine (Kunststoff-)Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der jeweiligen Folienschicht, aufweisen.

Darüber hinaus ist es weiterhin erfindungsgemäß vorgesehen, dass die einzelnen Folienschichten der erfindungsgemäßen Kunststofffolie jeweils zumindest im Wesentlichen (kunststoff-)sortenrein ausgebildet sind. Dabei weisen die Folienschichten jeweils eine (Kunststoff-) Sortenreinheit, insbesondere Sortenreinheit der Kunststoffsorte gemäß DIN EN ISO 11469, von mindestens 90 Gew.-%, insbesondere mindestens 95 Gew.-%, bezogen auf den Kunststoff(anteil) der jeweiligen Folienschicht, auf.

Zugleich ist es auch erfindungsgemäß vorgesehen, dass die einzelnen Folienschichten der erfindungsgemäßen Kunststofffolie jeweils zumindest im Wesentlichen nur eine (einzige) Kunststoffsorte, insbesondere nur eine (einzige) Kunststoffsorte gemäß DIN EN ISO 11469, aufweisen. Dabei liegt die Kunststoffsorte jeweils mit einer (Sorten-)Reinheit von mindestens 90 Gew.-%, insbesondere mindestens 95 Gew.-%, bezogen auf den Kunststoff(anteil) der jeweiligen Folienschicht, vor.

Ferner ist es vorgesehen, dass die einzelnen Folienschichten der erfindungsgemäßen Kunststofffolie jeweils zumindest im Wesentlichen nur sortenreinen Kunststoff aufweisen. Dabei beträgt die (Kunststoff-)Sortenreinheit, insbesondere die Sortenreinheit der Kunststoffsorte gemäß DIN EN ISO 11469, jeweils mindestens 90 Gew.-%, insbesondere mindestens 95 Gew.-%, bezogen auf den Kunststoff(anteil) der jeweiligen Folienschicht.

Gemäß einer weiteren besonderen Ausführungsform der vorliegenden Erfindung können die einzelnen Folienschichten der erfindungsgemäßen Kunststofffolie jeweils ein Kunststoffrezyklat auf Basis von Polyethylen (PE-Rezyklat) aufweisen, wobei die Folienschichten jeweils einen Kunststoffrezyklat-Anteil von mindestens 80 Gew.-%, bezogen auf die jeweilige Folienschicht, aufweisen.

Weiterhin kann es gemäß einer besonderen Ausführungsform vorgesehen sein, dass das Kunststoffrezyklat auf Basis von Polyethylen (PE-Rezyklat) eine (Polyethylen-)Sortenreinheit von mindestens 90 Gew.-%, insbesondere mindestens 95 Gew.-%, bezogen auf das Kunststoffrezyklat auf Basis von Polyethylen, aufweist.

Insbesondere ist die Verwendung von Polyethylen als Kunststoff bzw. die Verwendung von polyethylenbasiertem Kunststoffrezyklat vorteilhaft, da Abfallprodukte auf Basis von Polyethylen in hoher Menge verfügbar sind und Polyethylen sich sehr gut für die Rezyklierung eignet. Darüber hinaus ist Polyethylen gut verarbeitbar und für eine Vielzahl von Anwendungen geeignet.

Darüber hinaus kann es gemäß es einer weiteren besonderen Ausführungsform vorgesehen sein, dass die einzelnen Folienschichten der erfindungsgemäßen Kunststofffolie zusätzlich Primärpolyethylen (Polyethylen als und/oder in Form von Primärkunststoff) aufweisen, insbesondere in Mengen im Bereich von 0,1 Gew.-% bis 15 Gew.-%, insbesondere in Mengen im Bereich von 0,5 Gew.-% bis 10 Gew.-%, vorzugsweise in Mengen im Bereich von 1 Gew.-% bis 9 Gew.-%, bezogen auf die jeweilige Folienschicht.

Durch die gezielte Zugabe von geringen Mengen an Primärpolyethylen können die Endeigenschaften der erfindungsgemäßen Kunststofffolie eingestellt werden. Insbesondere können in diesem Zusammenhang gezielt und abhängig von den gewünschten Endeigenschaften bestimmte Polyethylentypen, wie beispielsweise Polyethylen mit einem bestimmten Molekulargewicht (z. B. UMHWPE, VLDPE etc.) und/oder Polyethylen mit einer bestimmten Dichte (d. h. z. B. HDPE, MDPE, LDPE, LLDPE etc.), zugegeben werden.

Die einzelnen Folienschichten der erfindungsgemäßen Kunststofffolie sind grundsätzlich in ihrer Herstellung bzw. Zusammensetzung und somit ihren Eigenschaften unabhängig voneinander, wobei es jedoch - wie zuvor ausgeführt - vorgesehen ist, dass alle Folienschichten jeweils zumindest im Wesentlichen aus derselben Kunststoffsorte, vorzugsweise Polyethylen, bestehen und zumindest im Wesentlichen auf Kunststoffrezyklat basieren und optional allenfalls nur geringe Mengen Primärkunststoff und/oder anderen Inhaltsstoffen enthalten.

In diesem Zusammenhang weisen erfindungsgemäß mindestens zwei der Folienschichten der erfindungsgemäßen Kunststofffolie jeweils unterschiedliche Eigenschaften auf.

Insbesondere können mindestens zwei der Folienschichten der erfindungsgemäßen Kunststofffolie jeweils unterschiedliche Schichtdicken aufweisen.

Weiterhin können mindestens zwei der Folienschichten der erfindungsgemäßen Kunststofffolie jeweils unterschiedliche optische Eigenschaften, insbesondere unterschiedliche Opazitäten und/oder unterschiedliche Färbungen, aufweisen.

Darüber hinaus können mindestens zwei der Folienschichten der erfindungsgemäßen Kunststofffolie jeweils unterschiedliche Inhaltsstoffe, insbesondere die zuvor definierten Inhaltsstoffe, aufweisen.

Erfindungsgemäß weisen mindestens zwei der Folienschichten der erfindungsgemäßen Kunststofffolie jeweils unterschiedliche mechanische Eigenschaften, insbesondere unterschiedliche Zugfestigkeiten in Längs- und/oder Querrichtung und/oder unterschiedliche Reißdehnungen in Längs- und/oder Querrichtung und/oder unterschiedliche dynamische Durchstoßfestigkeiten und/oder unterschiedliche Reibungskoeffizienten, auf.

Durch die unterschiedlichen Eigenschaften der einzelnen Folienschichten (insbesondere z. B. durch unterschiedliche Schichtdicken, unterschiedliche Opazitäten bzw. Färbungen, unterschiedliche Inhaltsstoffe und/oder unterschiedliche mechanische Eigenschaften etc.) können die Eigenschaften der (Gesamt-)Kunststofffolie eingestellt werden, sodass ein Maßschneidern der Folie entsprechend ihrer Anwendung möglich ist. In diesem Zusammenhang können dadurch beispielsweise die beiden Außenseiten unterschiedliche haptische und/oder optische Eigenschaften aufweisen.

Im Rahmen der vorliegenden Erfindung sollte die mehrschichtige Kunststofffolie eine Reihe von mechanische Eigenschaften aufweisen, insbesondere damit sie für die Anwendung als Verpackungsfolie geeignet ist bzw. die Anforderungen für die Verwendung als Verpackungsfolie erfüllt.

Typischerweise weist die erfindungsgemäße Kunststofffolie eine Zugfestigkeit in Längsrichtung von mindestens 10 N/mm², insbesondere mindestens 15 N/mm², vorzugsweise mindestens 19 N/mm², insbesondere bestimmt gemäß DIN EN ISO 527, auf.

Vorteilhafterweise weist die erfindungsgemäße Kunststofffolie eine Zugfestigkeit in Querrichtung von mindestens 10 N/mm², insbesondere mindestens 12 N/mm², vorzugsweise mindestens 17 N/mm², insbesondere bestimmt gemäß DIN EN ISO 527, auf.

Bei der Zugfestigkeit (Englisch: *tensile strength*) wird die maximale mechanische Zugspannung gemessen, welche die Kunststofffolie aushält, bevor sie zerreißt, und wird als Kraft pro Fläche angegeben. Bei der Zugfestigkeit handelt es sich um eine sogenannte intensive Größe bzw. Eigenschaft, d. h. um eine Zustandsgröße, welche sich bei unterschiedlicher Größe des betrachteten Systems nicht ändert, wobei diese Zustandsgröße jedoch von dem Material, beispielsweise der Herstellung des Probenkörpers, abhängt.

Bevorzugt weist die erfindungsgemäße Kunststofffolie eine Reißdehnung in Längsrichtung von mindestens 150 %, insbesondere mindestens 175 %, vorzugsweise mindestens 200 %, insbesondere bestimmt gemäß DIN EN ISO 527, auf.

Insbesondere weist die erfindungsgemäße Kunststofffolie eine Reißdehnung in Querrichtung von mindestens 180 %, insbesondere mindestens 225 %, vorzugsweise mindestens 250 %, insbesondere bestimmt gemäß DIN EN ISO 527, auf.

Die Reißdehnung, synonym auch als Bruchdehnung (Englisch: *tensile strain at break*) bezeichnet, gibt die verbleibende Verlängerung der Zugprobe nach dem Bruch an, bezogen auf die Anfangslänge, d. h. hierdurch wird die Verformungsfähigkeit bzw. Duktilität der Kunststofffolie bestimmt. Mit anderen Worten gibt die Reißdehnung bzw. Bruchdehnung das prozentuale Verhältnis der Längenänderung beim Bruch zur Ausgangslänge des Werkstoffs wieder und entspricht somit der Fähigkeit eines Werkstoffs, Formänderungen oder Rissbildungen zu folgen.

Vorzugsweise weist die erfindungsgemäße Kunststofffolie weiterhin eine dynamische Durchstoßfestigkeit von mindestens 1,2 g/µm, insbesondere mindestens 1,5 g/µm, vorzugsweise mindestens 1,7 g/µm, insbesondere bestimmt gemäß ASTM D 1709-98 (Dart-Drop-Test), auf.

Die dynamische Durchstoßfestigkeit, synonym auch als Schlagfestigkeit bezeichnet, bewertet die Schlagfestigkeit oder Zähigkeit einer Kunststofffolie. Gemessen wird die dynamische Durchstoßfestigkeit insbesondere mittels des sogenannten Dart-Drop-Tests, bei welchem die Kunststofffolie zunächst faltenfrei und fest eingespannt wird und anschließend fällt ein Fallhammer mit variablem Gewicht aus einer definierten Höhe auf die Folie. Es wird das Gewicht des Fallhammers ermittelt, bei welchem bei 50 % der Falltests die Folie durchstoßen wird.

Auch die Oberflächenspannung der erfindungsgemäßen Kunststofffolie (üblicherweise angegeben in der Einheit "dyn/cm" und insbesondere bestimmt gemäß DIN 53364) lässt sich anpassen bzw. maßschneidern. Die Oberflächenspannung, synonym auch als Oberflächenenergie bezeichnet, bezeichnet die freie Energie von Oberflächen und wird zumeist als relativer Energiewert der Grenzfläche der Kunststofffolie zu einer Flüssigkeit gemessen und ist nicht nur eine Materialeigenschaft, sondern charakterisiert auch die Eigenschaft des entsprechenden Systems, d. h. die Oberflächenspannung ist eine Systemeigenschaft. Bei der Messung der Oberflächenspannung gemäß DIN 53364 werden genormte Prüfflüssigkeiten mit schrittweise steigender Oberflächenspannung auf die Kunststofffolienoberfläche aufgetragen. Die Oberflächenenergie der Kunststofffolie ist annähernd gleich der Oberflächenspannung der Testflüssigkeit, wenn der aufgetragene Flüssigkeitsfilm für 2 Sekunden die Oberfläche benetzt, d. h. als Flüssigkeitsfilm auf der Oberfläche verbleibt.

Auch das Reibungsverhalten, insbesondere der Reibungskoeffizient, der erfindungsgemäßen Kunststofffolie lässt sich anpassen bzw. maßschneidern.

Typischerweise weist die (unbehandelte) erfindungsgemäße Kunststofffolie einen Reibungskoeffizienten (auch sogenannter "Coefficient of Friction" bzw. "COF") auf Metall von höchstens 0,45, insbesondere bestimmt gemäß DIN 53375, auf.

Insbesondere weist die behandelte, insbesondere die mittels Plasma oder Korona behandelte, erfindungsgemäße Kunststofffolie dagegen einen Reibungskoeffizienten ("Coefficient of Friction" bzw. "COF") auf Metall von höchstens 0,55, insbesondere bestimmt gemäß DIN 53375, auf.

Der Reibungskoeffizient, synonym auch als Reibungszahl bezeichnet (oder aber auch als sogenannter "Coefficient of Friction" bzw. "COF" bezeichnet), ist das dimensionslose Maß für die Reibungskraft im Verhältnis zu einer Anpresskraft zwischen zwei Körpern. Der Reibungskoeffizient wird gemäß DIN 53375 ermittelt, indem ein mit der Kunststofffolie bespanntes Prüfgewicht über eine Oberfläche, in diesem Fall: Metall, gezogen wird, wobei die Kraft gemessen wird, bei welcher sich das Prüfgewicht zu bewegen beginnt (Haftreibung), und es wird darüber hinaus auch die erforderliche Kraft gemessen, um das Prüfgewicht in Bewegung zu halten (Gleitreibung).

Die Oberfläche der erfindungsgemäßen Kunststofffolie kann insbesondere in weiteren Arbeitsschritten modifiziert werden bzw. mit weiteren (Folien-)Schichten versehen werden (z. B. Lackierungen, Hochglanzeffekte, Bedruckungen etc.). Im Rahmen der vorliegenden Erfindung kann beispielsweise eine Versiegelung zum Schutz der Oberfläche aufgebracht werden (beispielsweise um die Oberfläche wasserundurchlässig zu machen).

Typischerweise ist die erfindungsgemäße Kunststofffolie versiegelbar (siegelfähig) ausgebildet.

Insbesondere ist die erfindungsgemäße Kunststofffolie gleichermaßen veredelbar ausgebildet. Als Veredelung sind im Rahmen der vorliegenden Erfindung insbesondere alle Verfahren umfasst, welche die Oberflächeneigenschaften verändern bzw. verbessern.

Vorzugsweise ist die Kunststofffolie insbesondere beschichtbar ausgebildet. Im Rahmen der vorliegenden Erfindung sind Beschichtungen jeglicher Art möglich, welche auf die Oberfläche der Kunststofffolie aufgebracht werden können.

Vorteilhafterweise ist die Kunststofffolie insbesondere bedruckbar, insbesondere an mindestens einer ihrer äußeren Folienschichten bedruckbar, ausgebildet. Im Rahmen der vorliegenden Erfindung kann die Kunststofffolie bedruckt werden, um beispielsweise eine Kennzeichnung, Beschreibung, Zeichnung etc. aufzubringen.

Bevorzugt ist die Kunststofffolie rauh und/oder aufgerauht, insbesondere an mindestens einer ihrer äußeren Folienschichten rauh und/oder aufgerauht, ausgebildet, insbesondere mittels Plasma- oder Koronabehandlung.

Die Koronabehandlung ist ein elektrochemisches Verfahren zur Oberflächenmodifikation von Kunststoffen, bei welcher die Kunststofffolie einer elektrischen Hochspannungs-Entladung ausgesetzt wird, wodurch die Oberflächenspannung erhöht wird. Dieser Prozess wird zwischen einer geerdeten, polierten Walze aus Stahl oder Aluminium und einer eng anliegenden isolierten Elektrode durchgeführt, wobei auch isolierte Walzen und unisolierte Elektroden eingesetzt werden können. Die Kunststofffolie liegt auf der polierten Walze auf, so dass nur die der Elektrode zugewandte Seite behandelt wird, wobei die Rückseite mitbehandelt wird, wenn ein Luftspalt zwischen Walze und Kunststofffolie vorliegt. Alternativ zur Koronabehandlung kann auch ein Plasmaverfahren bzw. eine Plasmabehandlung der Oberfläche eingesetzt werden.

Darüber hinaus kann es im Rahmen der vorliegenden Erfindung vorgesehen sein, dass die Kunststofffolie bedruckt, insbesondere an einer ihrer äußeren Folienschichten bedruckt, vorzugsweise auf einer von der Trägerfolienschicht abgewandten Seite der betreffenden Folienschicht bedruckt, ist.

Durch die Bedruckung der erfindungsgemäßen Kunststofffolie an ihrer Außenseite ist der entsprechende Druck bei der Verwendung der Kunststofffolie für den Anwender bzw. Verbraucher erkenntlich und kann insbesondere zur Kennzeichnung der Verpackung genutzt werden.

Weiterhin kann es im Rahmen der vorliegenden Erfindung auch vorgesehen sein, dass die Kunststofffolie mit einem Identifizierungsmittel, vorzugsweise einer Markierung, insbesondere einem optisch und/oder elektronisch erfassbaren Identifizierungsmittel, versehen und/oder ausgerüstet ist, insbesondere an einer ihrer äußeren Folienschichten, vorzugsweise auf einer von der Trägerfolienschicht abgewandten Seite der betreffenden Folienschicht.

Das Aufbringen eines Identifizierungsmittels, welches beispielsweise in Form eines Schriftzugs, eines Siegels, eines Logos, eines Zeichens, einer Codierung, eines Barcodes, eines Zahlencodes, einer Pfalzung etc. vorliegen kann, ermöglicht eine schnelle und eindeutige Identifizierung der Kunststofffolie an sich oder auch der in der Kunststofffolie verpackten Güter. In diesem Zusammenhang kann das Identifizierungsmittel beispielsweise Informationen bezüglich der Herkunft, der Rezyklierbarkeit, der (Produkt-)Haftung, der Inhaltsstoffe, erfolgter Qualitätskontrollen, der Mindesthaltbarkeit etc. enthalten.

Gemäß einer besonderen Ausführungsform der vorliegenden Erfindung kann die erfindungsgemäße Kunststofffolie in Form einer Flachfolie, Schlauchfolie oder Halbschlauchfolie ausgebildet sein.

Gemäß einer weiteren besonderen Ausführungsform kann die erfindungsgemäße Kunststofffolie für die Verwendung als Verpackung, insbesondere in Form von Umverpackungen, Schläuchen, Beuteln oder Tüten, ausgebildet sein.

Gemäß einer wiederum weiteren besonderen Ausführungsform kann die erfindungsgemäße Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Haushaltsgütern und Haushaltswaren, oder aber für Hygieneanwendungen ausgebildet sein.

Weiterhin kann die erfindungsgemäße Kunststofffolie gemäß einer besonderen Ausführungsform für die Verwendung im Nichtlebensmittelbereich (Non-Food-Bereich), insbesondere als Verpackungsmaterial, ausgebildet sein.

Gemäß einer besonderen Ausführungsform der vorliegenden Erfindung kann es vorgesehen sein, dass die erfindungsgemäße Kunststofffolie, insbesondere der Schichtverbund der Kunststofffolie, weitere (Folien-)Schichten aufweist. Die weiteren (Folien-)Schichten können insbesondere ausgewählt sein aus der Gruppe von zusätzlichen und/oder weiteren Folienschichten, adhäsionsvermittelnden Schichten, Klebstoffschichten, Deckschichten, Farbschichten, Lackierungen sowie deren Kombinationen.

Durch die Anbringung weiterer (Folien-)Schichten, insbesondere weiterer der zuvor genannten Schichten, können die Eigenschaften der erfindungsgemäßen Kunststofffolie weitergehend eingestellt und entsprechend der Anwendungsanforderungen maßgeschneidert werden.

Insbesondere sind in diesem Zusammenhang die weiteren (Folien-)Schichten jeweils aus keinem andersartigen und/oder weiteren Kunststoffrezyklat, insbesondere aus keiner anderen und/oder weiteren Kunststoffsorte gemäß DIN EN ISO 11469, in Bezug auf die Folienschichten der erfindungsgemäßen Kunststofffolie ausgebildet.

Weiterhin ist es bevorzugt, wenn die weiteren (Folien-)Schichten jeweils ein in Bezug auf den das Kunststoffrezyklat ausbildenden Kunststoff gleiches und/oder gleichartiges Kunststoffrezyklat, insbesondere bezogen auf die das Kunststoffrezyklat ausbildende Kunststoffsorte gemäß DIN EN ISO 11469, aufweisen.

Darüber hinaus ist es weiterhin bevorzugt, wenn die weiteren (Folien-)Schichten jeweils eine in Bezug auf den das Kunststoffrezyklat ausbildenden Kunststoff gleiche und/oder gleichartige Kunststoffsorte, insbesondere gemäß DIN EN ISO 11469, aufweisen.

Da auch die möglichen weiteren (Folien-)Schichten die gleiche Kunststoffsorte wie das verwendete Kunststoffrezyklat aufweisen, ist die erfindungsgemäße Kunststofffolie auch bei dieser besonderen Ausführungsform weiterhin rezyklierbar.

Im Rahmen der vorliegenden Erfindung ist es bevorzugt, wenn die erfindungsgemäße Kunststofffolie rezyklierfähig (recyclingfähig) und/oder wiederverwertbar ausgebildet ist.

Weiterhin ist es im Rahmen der vorliegenden Erfindung auch bevorzugt, wenn die erfindungsgemäße Kunststofffolie nach ihrer Verwendung in Form ihres Kunststoffrezyklats für die Herstellung von kunststoffbasierten Produkten einsetzbar ist.

Insbesondere dadurch kann die auf Kunststoffrezyklat basierende erfindungsgemäße Kunststofffolie nach Gebrauch erneut zu Kunststoffrezyklat und anschließend zu einem neuen kunststoffbasierten Produkt verarbeitet werden. Somit entsteht ein nachhaltiger sowie langanhaltender Wertstoff- und Wirtschaftskreislauf.

Gemäß einer besonderen Ausführungsform kann es vorgesehen sein, dass die erfindungsgemäße Kunststofffolie opak, insbesondere opak in Bezug auf den Wellenlängenbereich des sichtbaren Lichts, ausgebildet ist.

Der Begriff der Opazität bezeichnet im Allgemeinen das Gegenteil von Transparenz, also mangelnde Durchsichtigkeit bzw. mangelnde Durchlässigkeit. Der Begriff wird insbesondere in der Optik und mit Bezug auf Materialien verwendet. Die Opazität ist somit ein Maß für die Lichtundurchlässigkeit (Trübung) von transluzenten (streuend lichtdurchlässigen) Materialien und Schichten. Klare Materialien (mit geringer Streuung) sind dagegen transparent; ihre Licht(un)durchlässigkeit wird als optische Dichte (logarithmisch) bzw. Transmission (linear) angegeben. Die Opazität ist der Kehrwert der Transmission.

Die Opazität beschreibt also das Maß der Lichtundurchlässigkeit bzw. Blickdichtigkeit in Prozent. insbesondere liegt die Opazität einer vollkommen lichtundurchlässigen Kunststofffolie bei 100 % und eine vollständig bzw. vollkommen transparente Kunststofffolie weist eine Opazität von 0 % auf.

In diesem Zusammenhang ist unter dem Begriff "opak" insbesondere die mangelnde Durchsichtigkeit bzw. die Lichtundurchlässigkeit, insbesondere die Blickdichtigkeit, zu verstehen. Insbesondere sind opake Kunststofffolien gerade nichttransparent im Wellenlängenbereich des sichtbaren Lichts. Der Wellenlängenbereich des sichtbaren Lichts bezieht sich insbesondere auf die elektromagnetische Strahlung im Wellenlängenbereich von 380 nm bis 780 nm.

Ein Vorteil einer opak ausgebildeten Kunststofffolie, insbesondere bei der Verwendung als oder für Verpackungsfolien, ist insbesondere die Tatsache, dass beispielsweise die darin enthaltenden Güter nicht erkennbar bzw. sichtbar sind. Weiterhin können die Güter vor UV-Strahlung geschützt werden, was beispielsweise organische Materialien vor Verkeimung, Algenbildung oder Schimmelbefall schützt.

Insbesondere kann es in diesem Zusammenhang vorgesehen sein, dass die erfindungsgemäße Kunststofffolie opak, insbesondere opak in Bezug auf den Wellenlängenbereich des sichtbaren Lichts, ausgebildet ist, wobei die opak ausgebildete Kunststofffolie eine Opazität von mindestens 80 %, insbesondere von mindestens 90 %, vorzugsweise von mindestens 95 %, besonders bevorzugt von mindestens 96 %, insbesondere bestimmt gemäß DIN 53146, aufweist.

Gemäß dieser besonderen Ausführungsform der vorliegenden Erfindung kann es vorgesehen sein, dass die opak ausgebildete Kunststofffolie farbig ausgebildet sein.

In diesem Zusammenhang sind unter "farbig" alle verfügbaren und/oder möglichen Farben, insbesondere im Wellenlängenbereich der elektromagnetischen Strahlung von 380 nm bis 780 nm, einschließlich der Farben "weiß", "schwarz" und "grau", zu verstehen.

Insbesondere kann die opak ausgebildete erfindungsgemäße Kunststofffolie farbgebende Inhaltsstoffe, insbesondere ausgewählt aus Farbpigmenten, Farbstoffen, Färbemitteln und deren Kombinationen, aufweisen.

Weiterhin kann es gemäß dieser besonderen Ausführungsform der vorliegenden Erfindung vorgesehen sein, dass die opak und/oder farbig ausgebildete erfindungsgemäße Kunststofffolie mindestens zwei voneinander verschiedene Farben und/oder mindestens zwei voneinander verschiedene farbgebende Inhaltsstoffe aufweist.

Darüber hinaus kann es gemäß dieser besonderen Ausführungsform der vorliegenden Erfindung vorgesehen sein, dass mindestens zwei Folienschichten der opak und/oder farbig ausgebildeten erfindungsgemäßen Kunststofffolie voneinander verschiedene Farben und/oder voneinander verschiedene farbgebende Inhaltsstoffe aufweisen.

Auch kann es gemäß dieser besonderen Ausführungsform der vorliegenden Erfindung vorgesehen sein, dass die erste äußere Folienschicht und die zweite äußere Folienschicht der opak und/oder farbig ausgebildeten erfindungsgemäßen Kunststofffolie voneinander verschiedene Farben und/oder voneinander verschiedene farbgebende Inhaltsstoffe aufweisen.

Durch die unterschiedlich farbige Ausbildung der äußeren Folienschichten kann beispielsweise gleichzeitig ein Sichtschutz, insbesondere durch eine dunkle Farbe (z. B. schwarz) oder durch eine deckende Farbe (z. B. silber) der einen äußeren Folienschicht, und eine farbliche Ausgestaltung der Verpackungsfolie, insbesondere durch die Verwendung einer weiteren, zu schwarz bzw. silber verschiedenen Farbe, bereitgestellt werden.

Weiterhin kann es gemäß dieser besonderen Ausführungsform der vorliegenden Erfindung vorgesehen sein, dass die erste äußere Folienschicht und die Trägerfolienschicht der opak und/oder farbig ausgebildeten erfindungsgemäßen Kunststofffolie jeweils weiß ausgebildet sind und/oder dass die erste äußere Folienschicht und die Trägerfolienschicht der opak und/oder farbig ausgebildeten erfindungsgemäßen Kunststofffolie jeweils ein Weißpigment, insbesondere ein anorganisches Weißpigment, vorzugsweise ausgewählt aus der Gruppe von Titandioxid, Litophonen, Bariumsulfat, Zinkoxid, Zinksulfid, Bleicarbonat, Aluminiumoxid, Siliciumdioxid, Calciumcarbonat, Bleiweiß, Cristobaltin, Kaolin, Kremserweiß, Marienglas, Calciumaluminatsulfat, Ton, Antimonweiß sowie deren Kombinationen, aufweisen.

Darüber hinaus kann es gemäß dieser besonderen Ausführungsform der vorliegenden Erfindung vorgesehen sein, dass die zweite äußere Folienschicht der opak und/oder farbig ausgebildeten erfindungsgemäßen Kunststofffolie metallfarben, insbesondere silberfarben, oder aber schwarz, vorzugsweise silberfarben, ausgebildet ist und/oder dass die zweite äußere Folienschicht der opak und/oder farbig ausgebildeten erfindungsgemäßen Kunststofffolie ein Metalleffektpigment, insbesondere Silberfarbenpigment, oder aber ein Schwarzpigment, bevorzugt ein anorganisches Metalleffektpigment, insbesondere anorganisches Silberfarbenpigment, oder aber ein anorganisches Schwarzpigment, besonders bevorzugt ein Metalleffektpigment, aufweist.

In diesem Zusammenhang kann das Schwarzpigment insbesondere ausgewählt sein aus der Gruppe von Anilinschwarz, Beinschwarz, Graphit, Holzkohle, Kernschwarz, Kupferdichromat, Eisenoxidschwarz, Rebschwarz, Ruß, Spinellschwarz, Manganschwarz, Schieferschwarz, Frankfurter Schwarz sowie deren Kombinationen.

Weiterhin kann das Silberfarbenpigment insbesondere ein Metalleffektpigment sein. Metalleffektpigmente sind insbesondere plattenförmige, metallische Pigmente, durch die bei einer Ausrichtung parallel zur Oberfläche eine gerichtete Reflektion auftritt. Bevorzugt sind Plättchen auf Basis von Aluminium und Messing.

Auch kann es gemäß dieser besonderen Ausführungsform der vorliegenden Erfindung vorgesehen sein, dass die opak und/oder farbig ausgebildete Kunststofffolie eine weiße und/oder ein Weißpigment aufweisende erste äußere Folienschicht, eine weiße und/oder ein Weißpigment aufweisende Trägerfolienschicht sowie eine metallfarbene und/oder ein Metalleffektpigment aufweisende oder aber eine schwarze und/oder ein Schwarzpigment aufweisende zweite äußere Folienschicht aufweist.

Insbesondere ist die Ausbildung der opaken und/oder farbig ausgebildeten Kunststofffolie mit einer schwarzen oder silberfarbenen ersten Außenseite und einer weißen zweiten Außenseite bevorzugt, da Verpackungsfolien auf dieser Basis zumindest im Wesentlichen blickdicht und zumindest im Wesentlichen UVundurchlässig bzw. wenigstens UV-lichtreduzierend sind, aber gleichzeitig eine helle Außenseite, welche insbesondere durch eine individuelle Bedruckung gekennzeichnet bzw. versehen werden kann, aufweist.

Gemäß diesem Aspekt der vorliegenden Erfindung (d. h. im Fall einer opak und/oder farbig ausgebildeten erfindungsgemäßen Kunststofffolie) ist insbesondere Gegenstand der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, insbesondere eine mehrschichtige Kunststofffolie wie zuvor definiert,
wobei die Kunststofffolie einen Schichtverbund von mindestens drei miteinander verbundenen, insbesondere mittels Koextrusion verbundenen und/oder koextrudierten, Folienschichten umfasst,
wobei die Kunststofffolie und/oder der Schichtverbund eine erste äußere Folienschicht und eine zweite äußere Folienschicht und eine zwischen der ersten äußeren Folienschicht und der zweiten äußeren Folienschicht angeordnete Trägerfolienschicht umfasst,
wobei die Kunststofffolie einen Kunststoffrezyklat-Anteil von mindestens 80 Gew.-%, bezogen auf die Kunststofffolie, aufweist,
wobei die Kunststofffolie eine Schichtdicke im Bereich von 10 µm bis 300 µm aufweist, wobei das Verhältnis der Schichtdicken von erster äußerer Folienschicht / Trägerfolienschicht / zweiter äußerer Folienschicht im Bereich von 10 - 35 : 40 - 60 : 10 - 35, insbesondere im Bereich von 15 - 30 : 45 - 55 : 15 - 30, variiert;
wobei die Kunststofffolie opak, insbesondere opak in Bezug auf den Wellenlängenbereich des sichtbaren Lichts, ausgebildet ist, insbesondere wobei die opak ausgebildete Kunststofffolie eine Opazität von mindestens 80 %, insbesondere von mindestens 90 %, vorzugsweise von mindestens 95 %, besonders bevorzugt von mindestens 96 %, insbesondere bestimmt gemäß DIN 53146, aufweist;
wobei mindestens zwei Folienschichten der opak und/oder farbig ausgebildeten Kunststofffolie voneinander verschiedene Farben und/oder voneinander verschiedene farbgebende Inhaltsstoffe aufweisen.

In diesem Zusammenhang kann es insbesondere vorgesehen sein, dass die erste äußere Folienschicht und die Trägerfolienschicht jeweils weiß ausgebildet sind und/oder dass die erste äußere Folienschicht und die Trägerfolienschicht jeweils ein Weißpigment aufweisen.

Weiterhin kann es in diesem Zusammenhang vorgesehen sein, dass die zweite äußere Folienschicht metallfarben, insbesondere silberfarben, oder aber schwarz, vorzugsweise silberfarben, ausgebildet ist und/oder wenn die zweite äußere Folienschicht ein Metalleffektpigment, insbesondere Silberfarbenpigment, oder aber ein Schwarzpigment, bevorzugt ein anorganisches Metalleffektpigment, insbesondere anorganisches Silberfarbenpigment, oder aber ein anorganisches Schwarzpigment, besonders bevorzugt ein Metalleffektpigment, aufweist.

Weiterhin ist gemäß diesem Aspekt der vorliegenden Erfindung (d. h. im Fall einer opak und/oder farbig ausgebildeten erfindungsgemäßen Kunststofffolie) insbesondere Gegenstand der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, insbesondere eine mehrschichtige Kunststofffolie wie zuvor definiert,
wobei die Kunststofffolie einen Schichtverbund von mindestens drei miteinander verbundenen, insbesondere mittels Koextrusion verbundenen und/oder koextrudierten, Folienschichten umfasst,
wobei die Kunststofffolie und/oder der Schichtverbund eine erste äußere Folienschicht und eine zweite äußere Folienschicht und eine zwischen der ersten äußeren Folienschicht und der zweiten äußeren Folienschicht angeordnete Trägerfolienschicht umfasst,
wobei die Kunststofffolie einen Kunststoffrezyklat-Anteil von mindestens 80 Gew.-%, bezogen auf die Kunststofffolie, aufweist,
wobei die Kunststofffolie eine Schichtdicke im Bereich von 10 µm bis 300 µm aufweist, wobei das Verhältnis der Schichtdicken von erster äußerer Folienschicht / Trägerfolienschicht / zweiter äußerer Folienschicht im Bereich von 10 - 35 : 40 - 60 : 10 - 35, insbesondere im Bereich von 15 - 30 : 45 - 55 : 15 - 30, variiert;
wobei die Kunststofffolie opak, insbesondere opak in Bezug auf den Wellenlängenbereich des sichtbaren Lichts, ausgebildet ist, insbesondere wobei die opak ausgebildete Kunststofffolie eine Opazität von mindestens 80 %, insbesondere von mindestens 90 %, vorzugsweise von mindestens 95 %, besonders bevorzugt von mindestens 96 %, insbesondere bestimmt gemäß DIN 53146, aufweist;
wobei mindestens zwei Folienschichten der opak und/oder farbig ausgebildeten Kunststofffolie voneinander verschiedene Farben und/oder voneinander verschiedene farbgebende Inhaltsstoffe aufweisen; wobei die erste äußere Folienschicht und die Trägerfolienschicht jeweils weiß ausgebildet sind und/oder wobei die erste äußere Folienschicht und die Trägerfolienschicht jeweils ein Weißpigment aufweisen und wobei die zweite äußere Folienschicht metallfarben, insbesondere silberfarben, oder aber schwarz, vorzugsweise silberfarben, ausgebildet ist und/oder wobei die zweite äußere Folienschicht ein Metalleffektpigment, insbesondere Silberfarbenpigment, oder aber ein Schwarzpigment, bevorzugt ein anorganisches Metalleffektpigment, insbesondere anorganisches Silberfarbenpigment, oder aber ein anorganisches Schwarzpigment, besonders bevorzugt ein Metalleffektpigment, aufweist.

Insbesondere kann die opak bzw. farbig ausgebildete Kunststofffolie bzw. die entsprechenden opak bzw. farbig ausgebildeten Folienschichten der erfindungsgemäßen Kunststofffolie einen Stabilisator, insbesondere einen UV-Stabilisator, aufweisen.

Typischerweise enthält die opak und/oder farbig ausgebildete Kunststofffolie mindestens einen Stabilisator, insbesondere einen UV-Stabilisator, vorzugsweise in Mengen im Bereich von 0,01 bis 5 Gew.-%, bevorzugt 0,1 bis 3 Gew.%, bezogen auf die Kunststofffolie.

Vorzugsweise enthalten die Folienschichten der opak und/oder farbig ausgebildeten Kunststofffolie jeweils mindestens einen Stabilisator, insbesondere einen UV-Stabilisator, vorzugsweise jeweils in Mengen im Bereich von 0,01 bis 5 Gew.-%, bevorzugt 0,1 bis 3 Gew.%, bezogen auf die jeweilige Folienschicht.

Gemäß einer alternativen besonderen Ausführungsform kann es vorgesehen sein, dass die Kunststofffolie transparent, insbesondere transparent in Bezug auf den Wellenlängenbereich des sichtbaren Lichts, ausgebildet ist.

In diesem Zusammenhang ist unter "transparent" die Durchsichtigkeit bzw. Durchlässigkeit zu verstehen, insbesondere sind transparente Kunststofffolien durchlässig in Bezug auf den Wellenlängenbereich des sichtbaren Lichts. Der Wellenlängenbereich des sichtbaren Lichts bezieht sich insbesondere auf die elektromagnetische Strahlung im Wellenlängenbereich von 380 nm bis 780 nm.

Transparenz bezeichnet in der Physik insbesondere die Fähigkeit von Materie, elektromagnetische Wellen hindurchzulassen (Transmission). Im Allgemeinen wird der Begriff meist auf sichtbares Licht, also auf den für den Menschen sichtbaren Spektralbereich elektromagnetischer Strahlung, bezogen. Transparenz ist also eine optische Eigenschaft eines Materials; andere optische Eigenschaften sind beispielsweise die Reflektivität und das Absorptionsvermögen.

Ein wesentlicher Vorteil einer transparent ausgebildeten erfindungsgemäßen Kunststofffolie, insbesondere bei der Verwendung als oder für Verpackungsfolien, ist die Tatsache, dass beispielsweise die darin enthaltenden Güter erkennbar bzw. sichtbar sind, was beispielsweise für die Qualitätskontrolle genutzt werden kann.

Wie zuvor ausgeführt, kann gemäß dieser alternativen besonderen Ausführungsform die erfindungsgemäße Kunststofffolie transparent, insbesondere transparent in Bezug auf den Wellenlängenbereich des sichtbaren Lichts, ausgebildet sein. Insbesondere kann es in diesem Zusammenhang vorgesehen sein, dass die transparent ausgebildete Kunststofffolie eine Transparenz von mindestens 70 %, insbesondere von mindestens 75 %, vorzugsweise von mindestens 80 %, besonders bevorzugt von mindestens 85 %, ganz besonders bevorzugt von mindestens 90 %, noch mehr bevorzugt von mindestens 95 %, insbesondere bestimmt gemäß DIN EN ISO 13468, aufweist.

Die Transparenz ist in diesem Zusammenhang das Maß der Lichtdurchlässigkeit in Prozent. Insbesondere liegt die Transparenz einer vollkommen lichtdurchlässigen Kunststofffolie bei 100 %, und eine vollkommen lichtundurchlässige Kunststofffolie weist eine Transparenz von 0 % auf (d. h. 100 % Opazität).

Auch kann es gemäß dieser besonderen Ausführungsform der vorliegenden Erfindung vorgesehen sein, dass die transparent ausgebildete erfindungsgemäße Kunststofffolie eine Opazität von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß DIN 53146, aufweist.

Weiterhin kann es auch vorgesehen sein, dass die transparent ausgebildete Kunststofffolie eine Trübung (sogenannter Haze-Wert) von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß ASTM D-1003, aufweist.

Der Haze-Wert ist in diesem Zusammenhang insbesondere ein Maß für die Trübung von transparenten Proben bzw. Kunststofffolien und beschreibt den Anteil des transmittierten Lichts, welcher von der durchstrahlten Probe bzw. Kunststofffolie nach vorne gestreut wird; d. h. also der Haze-Wert quantifiziert Materialfehler in der Oberfläche oder der Struktur, welche die klare Durchsicht stören.

Gemäß dieser besonderen Ausführungsform der vorliegenden Erfindung kann es darüber hinaus auch vorgesehen sein, dass die transparent ausgebildete erfindungsgemäße Kunststofffolie Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die Kunststofffolie.

Weiterhin kann es auch vorgesehen sein, dass mindestens eine der Folienschichten, insbesondere mindestens zwei der Folienschichten, vorzugsweise alle Folienschichten, der transparent ausgebildeten erfindungsgemäßen Kunststofffolie Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die jeweilige Folienschicht.

Durch die Zugabe von geringen Mengen Primärkunststoff kann die Transparenz der Kunststofffolie erhöht bzw. verbessert werden. Insbesondere können hierdurch etwaige noch im Kunststoffrezyklat vorhandene Verunreinigungen nivelliert bzw. vergleichmäßigt werden. Darüber hinaus können die Eigenschaften, insbesondere die optischen, haptischen und mechanischen Eigenschaften, durch die zielgerichtete Wahl des zugesetzten Primärkunststoffs beeinflusst, insbesondere angepasst bzw. maßgeschneidert, werden.

Typischerweise weist die erste äußere Folienschicht oder die zweite äußere Folienschicht der transparent ausgebildeten erfindungsgemäßen Kunststofffolie mindestens ein Antihaftmittel (Antiblockmittel) auf bzw. weist die transparent ausgebildete erfindungsgemäße Kunststofffolie weist mindestens ein Antihaftmittel (Antiblockmittel), insbesondere in und/oder auf einer der äußeren Folienschichten, auf.

In diesem Zusammenhang kann das Antihaftmittel (Antiblockmittel) in Mengen im Bereich von 0,5 bis 10 Gew.-%, insbesondere im Bereich von 1 Gew.-% bis 9 Gew.-%, vorzugsweise im Bereich von 2 Gew.-% bis 8 Gew.-%, besonders bevorzugt im Bereich von 3 Gew.-% bis 7 Gew.-%, vorhanden sein, bezogen auf die jeweilige äußere Folienschicht.

Darüber hinaus kann auch vorgesehen sein, dass das Antihaftmittel (Antiblockmittel) in Mengen im Bereich von 0,1 Gew.-% bis 6 Gew.-%, insbesondere im Bereich von 0,2 Gew.-% bis 5 Gew.-%, vorzugsweise im Bereich von 0,3 Gew.-% bis 4 Gew.-%, besonders bevorzugt im Bereich von 0,5 Gew.-% bis 3 Gew.-%, vorhanden ist, bezogen auf die Kunststofffolie.

In diesem Zusammenhang kann das mindestens eine Antihaftmittel insbesondere (Antiblockmittel) aus Kreide ausgewählt sein.

Die Zugabe eines Antihaftmittels bzw. Antiblockmittels, insbesondere in Form von Kreide, ist insbesondere bei transparenten Kunststofffolien, welche als Schlauch- oder Halbschlauchfolien ausgebildet sind, vorteilhaft. Transparent ausgebildete Kunststofffolien weisen eine sehr glatte und gleichmäßige Oberfläche auf, sodass im Falle von Schlauch- und Halbschlauchfolien die Innenseiten uerwünschterweise aneinander haften können bzw. nicht ohne Weiteres wieder trennbar sein können (was im Allgemeinen bei opak, insbesondere farbig, ausgebildeten Kunststofffolien nicht in dieser Weise der Fall, da beispielsweise durch die Farbpigmente eine verhältnismäßig rauhere Oberfläche vorliegt). Durch die Zugabe von geringen Mengen an Antihaftmittel, welches die Transparenz nicht maßgeblich beeinflusst, kann dieser Effekt insbesondere im Fall transparenter Folien effektiv verhindert werden. Das zugegebene Antihaftmittel hat keinen Einfluss auf die Rezyklierbarkeit der Kunststofffolie.

Gemäß diesem Aspekt der vorliegenden Erfindung (d. h. im Fall einer transparent ausgebildeten erfindungsgemäßen Kunststofffolie) ist insbesondere Gegenstand der vorliegenden Erfindung eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, insbesondere mehrschichtige Kunststofffolie wie zuvor definiert, bevorzugt eine transparente mehrschichtige Kunststofffolie wie zuvor definiert,
wobei die Kunststofffolie einen Schichtverbund von mindestens drei miteinander verbundenen, insbesondere mittels Koextrusion verbundenen und/oder koextrudierten, Folienschichten umfasst,
wobei die Kunststofffolie und/oder der Schichtverbund eine erste äußere Folienschicht und eine zweite äußere Folienschicht und eine zwischen der ersten äußeren Folienschicht und der zweiten äußeren Folienschicht angeordnete Trägerfolienschicht umfasst,
wobei die Kunststofffolie einen Kunststoffrezyklat-Anteil von mindestens 80 Gew.-%, bezogen auf die Kunststofffolie, aufweist,
wobei die Kunststofffolie eine Schichtdicke im Bereich von 10 µm bis 300 µm aufweist, wobei das Verhältnis der Schichtdicken von erster äußerer Folienschicht / Trägerfolienschicht / zweiter äußerer Folienschicht im Bereich von 10 - 35 : 40 - 60 : 10 - 35, insbesondere im Bereich von 15 - 30 : 45 - 55 : 15 - 30, variiert;
wobei die Kunststofffolie transparent, insbesondere transparent in Bezug auf den Wellenlängenbereich des sichtbaren Lichts, ausgebildet ist, insbesondere wobei die transparent ausgebildete Kunststofffolie eine Transparenz von mindestens 70 %, insbesondere von mindestens 75 %, vorzugsweise von mindestens 80 %, besonders bevorzugt von mindestens 85 %, ganz besonders bevorzugt von mindestens 90 %, noch mehr bevorzugt von mindestens 95 %, insbesondere bestimmt gemäß DIN EN ISO 13468, aufweist und/oder insbesondere wobei die transparent ausgebildete Kunststofffolie eine Opazität von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß DIN 53146, aufweist.

Weiterhin ist gemäß dieser Ausführungsform (d. h. im Fall einer transparent ausgebildeten erfindungsgemäßen Kunststofffolie) insbesondere auch Gegenstand der vorliegenden Erfindung gemäß diesem Erfindungsaspekt eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, insbesondere mehrschichtige Kunststofffolie wie zuvor definiert, bevorzugt eine transparente mehrschichtige Kunststofffolie wie zuvor definiert, wobei die Kunststofffolie einen Schichtverbund von mindestens drei miteinander verbundenen, insbesondere mittels Koextrusion verbundenen und/oder koextrudierten, Folienschichten umfasst,
wobei die Kunststofffolie und/oder der Schichtverbund eine erste äußere Folienschicht und eine zweite äußere Folienschicht und eine zwischen der ersten äußeren Folienschicht und der zweiten äußeren Folienschicht angeordnete Trägerfolienschicht umfasst,
wobei die Kunststofffolie einen Kunststoffrezyklat-Anteil von mindestens 80 Gew.-%, bezogen auf die Kunststofffolie, aufweist,
wobei die Kunststofffolie eine Schichtdicke im Bereich von 10 µm bis 300 µm aufweist, wobei das Verhältnis der Schichtdicken von erster äußerer Folienschicht / Trägerfolienschicht / zweiter äußerer Folienschicht im Bereich von 10 - 35 : 40 - 60 : 10 - 35, insbesondere im Bereich von 15 - 30 : 45 - 55 : 15 - 30, variiert;
wobei die Kunststofffolie transparent, insbesondere transparent in Bezug auf den Wellenlängenbereich des sichtbaren Lichts, ausgebildet ist, insbesondere wobei die transparent ausgebildete Kunststofffolie eine Transparenz von mindestens 70 %, insbesondere von mindestens 75 %, vorzugsweise von mindestens 80 %, besonders bevorzugt von mindestens 85 %, ganz besonders bevorzugt von mindestens 90 %, noch mehr bevorzugt von mindestens 95 %, insbesondere bestimmt gemäß DIN EN ISO 13468, aufweist und/oder insbesondere wobei die transparent ausgebildete Kunststofffolie eine Opazität von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß DIN 53146, aufweist;
wobei die transparent ausgebildete Kunststofffolie Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die Kunststofffolie, und/oder wobei mindestens eine der Folienschichten, insbesondere mindestens zwei der Folienschichten, vorzugsweise alle Folienschichten, der transparent ausgebildete Kunststofffolie Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die jeweilige Folienschicht.

Darüber hinaus ist insbesondere auch Gegenstand der vorliegenden Erfindung gemäß diesem Erfindungsaspekt (d. h. im Fall einer transparent ausgebildeten erfindungsgemäßen Kunststofffolie) eine mehrschichtige Kunststofffolie, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, insbesondere mehrschichtige Kunststofffolie wie zuvor definiert, bevorzugt eine transparente mehrschichtige Kunststofffolie wie zuvor definiert,
wobei die Kunststofffolie einen Schichtverbund von mindestens drei miteinander verbundenen, insbesondere mittels Koextrusion verbundenen und/oder koextrudierten, Folienschichten umfasst,
wobei die Kunststofffolie und/oder der Schichtverbund eine erste äußere Folienschicht und eine zweite äußere Folienschicht und eine zwischen der ersten äußeren Folienschicht und der zweiten äußeren Folienschicht angeordnete Trägerfolienschicht umfasst,
wobei die Kunststofffolie einen Kunststoffrezyklat-Anteil von mindestens 80 Gew.-%, bezogen auf die Kunststofffolie, aufweist,
wobei die Kunststofffolie eine Schichtdicke im Bereich von 10 µm bis 300 µm aufweist, wobei das Verhältnis der Schichtdicken von erster äußerer Folienschicht / Trägerfolienschicht / zweiter äußerer Folienschicht im Bereich von 10 - 35 : 40 - 60 : 10 - 35, insbesondere im Bereich von 15 - 30 : 45 - 55 : 15 - 30, variiert;
wobei die Kunststofffolie transparent, insbesondere transparent in Bezug auf den Wellenlängenbereich des sichtbaren Lichts, ausgebildet ist, insbesondere wobei die transparent ausgebildete Kunststofffolie eine Transparenz von mindestens 70 %, insbesondere von mindestens 75 %, vorzugsweise von mindestens 80 %, besonders bevorzugt von mindestens 85 %, ganz besonders bevorzugt von mindestens 90 %, noch mehr bevorzugt von mindestens 95 %, insbesondere bestimmt gemäß DIN EN ISO 13468, aufweist und/oder insbesondere wobei die transparent ausgebildete Kunststofffolie eine Opazität von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß DIN 53146, aufweist;
wobei die transparent ausgebildete Kunststofffolie Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die Kunststofffolie, und/oder wobei mindestens eine der Folienschichten, insbesondere mindestens zwei der Folienschichten, vorzugsweise alle Folienschichten, der transparent ausgebildete Kunststofffolie Primärkunststoff(e) der gleichen Kunststoffsorte gemäß DIN EN ISO 11469 wie das Kunststoffrezyklat enthält, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%, bezogen auf die jeweilige Folienschicht;
wobei die Folienschichten jeweils ein Kunststoffrezyklat auf Basis von Polyethylen (PE-Rezyklat) aufweisen, wobei die Folienschichten jeweils einen Kunststoffrezyklat-Anteil von mindestens 80 Gew.-%, bezogen auf die jeweilige Folienschicht, aufweisen, wobei das Kunststoffrezyklat auf Basis von Polyethylen (PE-Rezyklat) eine (Polyethylen-)Sortenreinheit von mindestens 90 Gew.-%, insbesondere mindestens 95 Gew.-%, bezogen auf das Kunststoffrezyklat auf Basis von Polyethylen, aufweist, und wobei die Folienschichten zusätzlich Primärpolyethylen (Polyethylen als und/oder in Form von Primärkunststoff) aufweisen insbesondere in Mengen im Bereich von 0,1 Gew.-% bis 15 Gew.-%, insbesondere in Mengen im Bereich von 0,5 Gew.-% bis 10 Gew.-%, vorzugsweise in Mengen im Bereich von 1 Gew.-% bis 9 Gew.-%, bezogen auf die jeweilige Folienschicht.

In diesem Zusammenhang ist es insbesondere bevorzugt, wenn das Primärpolyethylen (Polyethylen als und/oder in Form von Primärkunststoff) ausgewählt ist aus LDPE (Low Density Polyethylene) und LLDPE (Linear Low Density Polyethylene), insbesondere LLDPE (Linear Low Density Polyethylene).

Insgesamt kann die erfindungsgemäße mehrschichtige Kunststofffolie somit gemäß den beiden alternativen Ausführungsformen entweder transparent oder aber opak, insbesondere farbig, ausgebildet sein. Dadurch ist die erfindungsgemäße Kunststofffolie universell einsetzbar, insbesondere als Verpackungsfolie für eine Vielzahl von unterschiedlichen Waren und Gütern mit entsprechenden unterschiedlichen Verpackungsanforderungen.

Zur Herstellung der mehrschichtigen Kunststofffolie wird Kunststoffrezyklat bzw. Recyclingkunststoff verwendet, welches auf Kunststoffabfällen basiert. Die Gewinnung eines Kunststoffrezyklats, welches sich zur Herstellung der erfindungsgemäßen mehrschichtigen Kunststofffolie eignet, kann beispielsweise wie folgt erfolgen:
Zunächst werden die Kunststoffabfälle im Haushalt durch den Verbraucher vorsortiert, insbesondere in Deutschland im Zusammenhang mit dem Abfallsammel- und Verwertungssystem "*Grüner Punkt*", gemäß welchem die Kunststoffabfälle im gelben Sack oder der gelben Tonne gesammelt bzw. vom Verbraucher entsorgt werden. Anschließend kommen diese im Haushalt durch den Verbraucher vorsortierten Kunststoffabfälle in eine Sortieranlage, welche, vorzugsweise automatisch, die Kunststoffabfälle in einem mehrstufigen Prozess trennt. Zunächst werden die Abfälle nach Größe sortiert, damit das weitere Trennverfahren vereinfacht wird. Anschließend werden beispielsweise in einem Windsichter leichte Materialien, wie z. B. Folien, aussortiert, so dass die anschließende weitere Sortierung des Hartplastiks nach der entsprechenden Kunststoffsorte (d.h. Kunststoffsorte gemäß DIN EN ISO 11469) erfolgen kann. Das Hartplastik kann zu diesem Zweck in einem nächsten Schritt durch einen Scanner, z. B. einen Nahinfrarotscanner, schrittweise nach Kunststoffsorte (d. h. beispielsweise PE, PP, PET etc.) sortiert werden, wobei im Anschluss an die automatische Sortierung eine Handnachsortierung erfolgen kann. Weiterhin kann auch noch eine weiterführende Sortierung z. B. nach Dichte oder Farbe erfolgen. Die auf diese Weise erhältlichen, zumindest im Wesentlichen sortenreinen Kunststoffabfälle werden üblicherweise in einem nächsten Schritt zerkleinert, insbesondere geschreddert, und dann typischerweise einer Reinigung (üblicherweise einer Wäsche) mit anschließender Trocknung unterzogen. Diese zumindest im Wesentlichen sortenreinen, zerkleinerten und gereinigten Kunststoffabfälle können anschließend auch noch einer weiterführenden Nachsortierung nach ihrer Kunststoffsorte unterzogen werden, optional gefolgt von einer vorzugsweise automatischen Farbsortierung (sofern eine Farbsortierung nicht bereits vorab erfolgt ist, z. B. vor der Zerkleinerung oder aber nach der Reinigung etc.). Der nunmehr zumindest im Wesentlichen sortenreine, insbesondere auch farbengleiche, zerkleinerte und gereinigte Kunststoffabfall wird beispielsweise in einem Extruder aufgeschmolzen, anschließend mittels eines Filters einer letzten Reinigung unterzogen und zu Granulat verarbeitet. Dieses letztendlich erhaltene Granulat entspricht dem im Rahmen der vorliegenden Erfindung eingesetzten Kunststoffrezyklat.

Die Herstellung der erfindungsgemäßen mehrschichtigen Kunststofffolie auf Basis eines solchen Kunststoffrezyklats kann beispielsweise folgendermaßen ablaufen: Zunächst wird das Kunststoffrezyklat beispielsweise in einem Extruder aufgeschmolzen, wobei der resultierenden Schmelze mögliche bzw. optionale weitere Inhaltsstoffe, wie beispielsweise Stabilisatoren, Farbstoffe bzw. Farbpigmente, Primärkunststoffe, Antihaftmittel etc., zugesetzt werden. Diese resultierende Schmelze wird dann, bevorzugt unter Druck, kontinuierlich aus einer formgebenden Öffnung bzw. Düse herausgepresst. Vorzugsweise eignet sich zur Herstellung der erfindungsgemäßen mehrschichtigen Kunststofffolie, insbesondere eines entsprechenden Folienschlauchs, die sogenannte Blasfolienextrusion, bei welcher die Schmelze aus einer Ringdüse (aus welcher die einzelnen Folienschichten unmittelbar als Koextrudat und somit bereits als Folienschichtverbund austreten) in Form eines koextrudierten mehrschichtigen Folienschlauchs austritt und im Allgemeinen nach oben abgeführt wird. Da es sich erfindungsgemäß um eine mehrschichtige Kunststofffolie handelt, auch Koex(trusions)-Folie genannt, werden dem Blasverfahren Schmelzen aus mehreren Extrudern zugeführt, welche über eine Mehrschichtringdüse zu einer gemeinsamen Folie vereinigt, insbesondere koextrudiert, werden. Entsprechend dieser Technik können sowohl Schlauchfolien als auch hieraus wiederum (durch Aufschneiden der Schlauchfolie) Halbschlauchfolien sowie Flachfolien hergestellt werden, wobei jedoch die spezielle Ausbildung der Düse je nach herzustellender Folie (d. h. Flach-, Schlauch- oder Halbschlauchfolie) variieren können. Alternativ können speziell im Fall von mehrschichtigen Flachfolien auch schlitzförmige Auslassdüsen, insbesondere schlitzförmige Mehrschichtauslassdüsen, zum Einsatz kommen; auch können (erfindungsgemäß allerdings weniger bevorzugt) im Fall von mehrschichtigen Flachfolien die Einzelschichten zunächst separat extrudiert und nachfolgend laminiert werden. Die Schichtdicke der hergestellten mehrschichtigen Kunststofffolien kann durch eine Vielzahl von Herstellungsparametern, beispielsweise durch den Extrusionsdruck, die Düsenform und Düsenschlitzgröße, die bei der Blasfolienextrusion eingetragenen Luftmenge, die Granulatmenge, die bei der Extrusion angewandte Austritts- oder Abzugsgeschwindigkeit, Abquetschdruck etc., variiert werden.

Die zuvor in ihren Grundzügen beschriebene Herstellung von mehrschichtigen Kunststofffolien mittels Extrusion, insbesondere Koextrusion, ist dem Fachmann als solche bzw. an sich hinlänglich bekannt, sodass bezüglich weiterer betreffender Einzelheiten auf das allgemeine Fachwissen verwiesen werden kann.

Weiterer Gegenstand der vorliegenden Erfindung - gemäß einem **zweiten** Aspekt der vorliegenden Erfindung - ist die Verwendung einer mehrschichtigen Kunststofffolie, wie zuvor definiert, zur Herstellung von Verpackungsmaterial und/oder als Verpackungsmaterial.

Insbesondere ist es gemäß diesem Aspekt der vorliegenden Erfindung bevorzugt, wenn die Kunststofffolie in Form einer Flachfolie, Schlauchfolie oder Halbschlauchfolie verwendet wird.

Weiterhin kann es gemäß einer besonderen Ausführungsform gemäß diesem Aspekt der vorliegenden Erfindung vorgesehen sein, dass die Kunststofffolie in Form von Umverpackungen, Schläuchen, Beuteln oder Tüten verwendet wird.

Entsprechend einer bevorzugten Ausführungsform gemäß diesem Erfindungsaspekt ist es vorgesehen, dass die erfindungsgemäße Kunststofffolie über automatisierte Abfüll- und/oder Verpackungsanlagen (z. B. FFS- oder VFFS-Anlagen), bevorzugt als sogenannte Rollenware, verarbeitet wird, insbesondere zu der gewünschten Endverpackung.

Im Rahmen der erfindungsgemäßen Verwendung wird die erfindungsgemäße Kunststofffolie bevorzugt als sogenannte PCR-Kunststofffolie eingesetzt.

Darüber hinaus kann es gemäß einer weiteren besonderen Ausführungsform dieses Aspekts der vorliegenden Erfindung vorgesehen sein, dass die Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Haushaltsgütern und Haushaltswaren, oder aber für Hygieneanwendungen verwendet wird.

Gemäß diesem Aspekt der vorliegenden Erfindung kann es insbesondere vorgesehen sein, dass die Kunststofffolie zu Verpackungszwecken und/oder als Verpackungsmaterial im Nichtlebensmittelbereich (Non-Food-Bereich) verwendet wird.

Bezüglich weiterer Einzelheiten zur erfindungsgemäßen Verwendung einer mehrschichten Kunststofffolie nach der Erfindung wird auf die vorstehenden Ausführungen in Bezug auf die erfindungsgemäße mehrschichtige Kunststofffolie verwiesen, welche entsprechend auch für diesen Aspekt der vorliegenden Erfindung gelten.

Darüber hinaus ist auch Gegenstand der vorliegenden Erfindung - gemäß einem **dritten** Aspekt der vorliegenden Erfindung - ein Verpackungsmaterial, umfassend mindestens eine mehrschichtige Kunststofffolie, wie zuvor definiert.

Insbesondere ist es gemäß diesem Aspekt der vorliegenden Erfindung bevorzugt, wenn das Verpackungsmaterial und/oder die Kunststofffolie in Form von Umverpackungen, Schläuchen, Beuteln oder Tüten ausgebildet ist/sind.

Gemäß einer besonderen Ausführungsform dieses Erfindungsaspektes kann es insbesondere vorgesehen sein, dass das Verpackungsmaterial und/oder die Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Haushaltsgütern und Haushaltswaren, oder aber für Hygieneanwendungen ausgebildet ist/sind.

Gemäß einer weiteren besonderen Ausführungsform dieses Erfindungsaspekts kann es gleichermaßen vorgesehen sein, dass das Verpackungsmaterial und/oder die Kunststofffolie zur Verpackungszwecken und/oder als Verpackungsmaterial im Nichtlebensmittelbereich (Non-Food-Bereich) ausgebildet ist/sind.

Bezüglich weiterer Einzelheiten zu dem erfindungsgemäßen Verpackungsmaterial wird auf die vorstehenden Ausführungen in Bezug auf die erfindungsgemäße mehrschichtige Kunststofffolie und dessen Verwendung verwiesen, die entsprechend auch für diesen Aspekt der vorliegenden Erfindung gelten.

Im Folgenden wird die Erfindung anhand einer lediglich ein Ausführungsbeispiel darstellenden Figurendarstellung näher erläutert. In der einzigen Zeichnung zeigt:

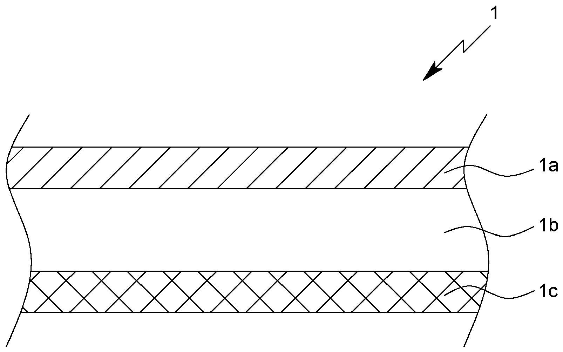

- Fig. 1: eine schematische Querschnittsdarstellung einer mehrschichtigen Kunststofffolie gemäß einer besonderen Ausführungsform der vorliegenden Erfindung.

Die einzige Figur, Fig. 1, zeigt eine erfindungsgemäße mehrschichtige Kunststofffolie 1, wobei die Kunststofffolie einen Schichtverbund von drei miteinander verbundenen Folienschichten 1a, 1b, 1c umfasst, wobei die Kunststofffolie 1 bzw. der Schichtverbund eine äußere Folienschicht 1a und eine zweite äußere Folienschicht 1c und eine zwischen der ersten äußeren Folienschicht 1a und der zweiten äußeren Folienschicht 1c angeordnete Trägerfolienschicht 1b umfasst.

Erfindungsgemäß wird gemäß Fig. 1 insbesondere eine mehrschichtige Kunststofffolie 1, insbesondere mehrschichtige Kunststoffverbundfolie, vorzugsweise mehrschichtige Kunststoffverpackungsfolie, auf Basis von Kunststoffrezyklat (Recyclingkunststoff), insbesondere auf Basis von aus Abfall stammendem Kunststoffrezyklat, bereitgestellt, wobei die Kunststofffolie 1 einen Schichtverbund von mindestens drei miteinander verbundenen, insbesondere mittels Koextrusion verbundenen und/oder koextrudierten, Folienschichten 1a, 1b, 1c umfasst, wobei die Kunststofffolie 1 und/oder der Schichtverbund eine erste äußere Folienschicht 1a und eine zweite äußere Folienschicht 1c und eine zwischen der ersten äußeren Folienschicht 1a und der zweiten äußeren Folienschicht 1c angeordnete Trägerfolienschicht 1b umfasst, wobei die Kunststofffolie 1 einen Kunststoffrezyklat-Anteil von mindestens 80 Gew.-%, bezogen auf die Kunststofffolie 1, aufweist.

Weiterhin zeigt Fig. 1, dass bei der dort konkret abgebildeten Ausführungsform die Schichtdicke der Trägerfolienschicht 1b 40 % bis 60 %, bevorzugt 45 % bis 55 %, besonders bevorzugt etwa 50 %, der (Gesamt-)Schichtdicke der Kunststofffolie 1 betragen kann, während die (summierten) Schichtdicken der äußeren Folienschichten 1a, 1c 40% der 60%, bevorzugt 45% bis 55%, besonders bevorzugt etwa 50 %, der (Gesamt-)Schichtdicke der Kunststofffolie 1 betragen können. Mit anderen Worten kann gemäß dieser besonderen Ausführungsform der vorliegenden Erfindung, wie sie in Fig. 1 dargestellt ist, das Verhältnis der Schichtdicken, d. h. das Schichtdickenverhältnis erste äußere Folienschicht 1a / Trägerfolienschicht 1b / zweite äußere Folienschicht 1c, im Bereich von 10 - 35 : 40 - 60 : 10 - 35, insbesondere im Bereich von 15 - 30 : 45 - 55 : 15 - 30, variieren.

Eine solche Ausbildung der erfindungsgemäßen mehrschichtigen Kunststofffolie ermöglicht eine besonders hohe Stabilität und ein effizientes Maßschneidern der Endeigenschaften in Bezug auf die entsprechende Anwendung.

Bezüglich weiterer Einzelheiten wird auf die vorstehenden Ausführungen verwiesen, welche bezüglich der Figurendarstellung entsprechend gelten.

Weitere Ausgestaltungen, Abwandlungen und Variationen der vorliegenden Erfindung sind für den Fachmann beim Lesen der Beschreibung ohne Weiteres erkennbar oder realisierbar, ohne dass er dabei den Rahmen der vorliegenden Erfindung verlässt.

Die vorliegende Erfindung wird anhand der nachfolgenden Ausführungsbeispiele veranschaulicht, welche die vorliegende Erfindung jedoch keinesfalls beschränken sollen, sondern lediglich die beispielhafte und nichtlimitierende Durchführungsweise und Ausgestaltung der vorliegenden Erfindung erläutern sollen.

### AUSFÜHRUNGSBEISPIELE:

**Verwendete Abkürzungen**

| | |
|---|---|
| • PE-Rezyklat: | Kunststoffrezyklat auf Basis von Polyethylen, insbesondere mit einer Sortenreinheit von mindestens 90 Gew.-% |
| • Primär-PE: | aus fossilen Rohstoffen neu hergestelltes Polyethylen |
| • AMF 715: | Gleitmittel; POLYBATCH^{®} AMF 715 HF-IP, Firma A. Schulman / LyondellBasell |
| • weiß 8750 ES: | weiße Farbe; POLYWHITE^{®} 8570 ES, Firma A. Schulman / LyondellBasell |
| • silber 7030: | silberne Farbe; POLYBATCH^{®} 7030, Firma A. Schulman / LyondellBasell |
| • schwarz 2723 | schwarze Farbe; POLYBLACK^{®} 2723 Pm, Firma A. Schulman / LyondellBasell |
| • UV-Stabilisator: | POLYBATCH^{®} UV 1952, Firma A. Schulman / LyondellBasell |

### Herstellung erfindungsgemäßer Kunststofffolien

Zur Herstellung mehrschichtiger (hier konkret: jeweils dreischichtiger) Kunststofffolien nach der vorliegenden Erfindung (d. h. PCR-Kunststofffolien) mit einem Kunststoffrezyklat-Anteil jeweils von mindestens 80 Gew.-%, bezogen auf die Kunststofffolie, gemäß besonderer Ausführungsformen der vorliegenden Erfindung wird wie folgt vorgegangen:
In einer zuvor im Rahmen der Beschreibung offenbarten Weise wird zunächst PEsortenreiner, zerkleinerter und gereinigter PE-Kunststoffabfall aufbereitet und erhalten (PE-Sortenreinheit im Sinne von DIN EN ISO 11469 von mindestens 95 Gew.-%, bezogen auf das PE-Kunststoffabfall), welcher nachfolgend in an sich bekannter Weise zu einem polyethylenbasierten Kunststoffrezyklat in Form eines Granulats verarbeitet wird (PE-Rezyklat mit PE-Sortenreinheit ≥ 95 Gew.-%, bezogen auf das PE-Rezyklat).

Anschließend wird dieses granulatförmige PE-Rezyklat (polyethylenbasiertes PCR-Kunststoffrezyklat) unter Zugabe weiterer gewünschter Inhaltsstoffe (z. B. Stabilisatoren, insbesondere UV-Stabilisatoren, Farbpigmente und optional auch Gleitmittel im Fall opak bzw. farbig ausgebildeter Kunststofffolien bzw. Primärpolyethylen und Antihaftmittel im Fall transparent ausgebildeter Kunststofffolien etc.) in an sich bekannter, zuvor im Rahmen der Beschreibung offenbarten Weise mittels Blasfolienextrusion unter Verwendung einer Mehrschichtringdüse zu den entsprechenden dreischichtigen PE-Rezyklatfolien (PE-Rezyklat-Anteil bzw. PCR-Anteil auf Basis von PE jeweils ≥ 80 Gew.-%, bezogen auf die Kunststofffolie) verarbeitet. Die erhaltenen Schlauchfolien können in an sich bekannter Weise auch zu Halbschlauchfolien und Flachfolien weiterverarbeitet werden.

Die auf diese Weise erhaltenen Kunststofffolien nach der vorliegenden Erfindung sowie deren Zusammensetzung und Eigenschaften sind nachfolgend beschrieben. Aufgrund ihrer hohen Umweltkompatibilität, insbesondere aufgrund des hohen PE-Rezyklat-Anteils von jeweils ≥ 80 %, können die erfindungsgemäßen Kunststofffolien bei ihrer Verwendung entsprechend gekennzeichnet und beworben werden (z. B. in Deutschland mit dem Umweltzeichen "*Blauer Engel*").

Alle hergestellten erfindungsgemäßen Kunststofffolien weisen einen dreischichtigen Aufbau erster äußerer Folienschicht 1a/ Trägerfolienschicht 1c/ zweiter äußerer Folienschicht 1c entsprechend Fig. 1 auf.

Es werden erfindungsgemäße Kunststofffolien mit Foliendicken im Bereich von 35 µm bis 150 µm hergestellt. Das Verhältnis der Schichtdicken von erster äußerer Folienschicht / Trägerfolienschicht / zweiter äußerer Folienschicht wird ebenfalls variiert.

### 1. Transparente Flachfolien

Im Rahmen des zuvor beschriebenen Verfahrens werden transparente Flachfolien mit Gesamtschichtdicken von 35 µm, 50 µm, 80 µm und 120 µm mit der in Tabelle 1 beschriebenen Zusammensetzung hergestellt. Die Flachfolien weisen jeweils ein Verhältnis der Schichtdicken von erster äußerer Folienschicht / Trägerfolienschicht / zweiter äußerer Folienschicht von 25 : 50 : 25 auf.

**Tabelle 1: Zusammensetzung der jeweiligen Schichten von erfindungsgemäßen transparenten Flachfolien**

| **Rohstoff** | **erste äußere Folienschicht** | **Trägerfolienschicht** | **zweite äußere Folienschicht** |
|---|---|---|---|
| **PE-Rezyklat** | 90,5 % | 91,0 % | 90,5 % |
| **Primär-PE** | 9,0 % | 9,0 % | 9,0 % |
| **AMF 715** | 0,5 % | - | 0,5 % |

### 2. Transparente Schlauch- und Halbschlauchfolien

Im Rahmen des zuvor beschriebenen Verfahrens werden transparente Schlauch- und Halbschlauchfolien mit Gesamtschichtdicken von 35 µm, 50 µm, 80 µm und 120 µm mit der in Tabelle 2 beschriebenen Zusammensetzung hergestellt. Die Kunststofffolien weisen jeweils ein Verhältnis der Schichtdicken von erster äußerer Folienschicht / Trägerfolienschicht / zweiter äußerer Folienschicht von 25 : 50 : 25 auf, wobei die zweite äußere Folienschicht die Innenseite der Schlauch- und Halbschlauchfolien darstellt.

**Tabelle 2: Zusammensetzung der jeweiligen Schichten von erfindungsgemäßen transparenten Schlauch- und Halbschlauchfolien**

| **Rohstoff** | **erste äußere Folienschicht** | **Trägerfolienschicht** | **zweite äußere Folienschicht** |
|---|---|---|---|
| **PE-Rezyklat** | 90,5 % | 91,0 % | 85,5 % |
| **Primär-PE** | 9,0 % | 9,0 % | 9,0 % |
| **AMF 715** | 0,5 % | - | 0,5 % |
| **Kreide** | - | - | 5,0 % |

### 3. weiß/weiß/silberne Flach-, Schlauch- und Halbschlauchfolien (opake Folien)

Im Rahmen des zuvor beschriebenen Verfahrens werden opake Kunststofffolien, insbesondere sowohl Flachfolien als auch Schlauch- und Halbschlauchfolien, jeweils mit Gesamtschichtdicken von 50 µm, 80 µm, 120 µm und 150 µm mit der in Tabelle 3 beschriebenen Zusammensetzung hergestellt. In diesem Zusammenhang sind die erste äußere Folienschicht und die Trägerfolienschicht weiß ausgebildet und die zweite äußere Folienschicht ist silberfarben ausgebildet, wobei die zweite äußere Folienschicht die Innenseite im Falle der Schlauch- und Halbschlauchfolien darstellt. Die Kunststofffolien weisen jeweils ein Verhältnis der Schichtdicken von erster äußerer Folienschicht / Trägerfolienschicht / zweiter äußerer Folienschicht von 28 : 50 : 22 auf.

**Tabelle 3: Zusammensetzung der jeweiligen Schichten von erfindungsgemäßen weiß/weiß/silbernen Flach-, Schlauch- und Halbschlauchfolien**

| **Rohstoff** | **erste äußere Folienschicht** | **Trägerfolienschicht** | **zweite äußere Folienschicht** |
|---|---|---|---|
| **PE-Rezyklat** | 93,0 % | 88,0 % | 88,0 % |
| **weiß 8750 ES** | 5,0 % | 10,0 % | - |
| **silber 7030** | - | - | 10,0 % |
| **UV-Stabilisator** | 2,0 % | 2,0 % | 2,0 % |

### 4. weiß/weiß/schwarze Flach-, Schlauch- und Halbschlauchfolien (opake Folien)

Im Rahmen des zuvor beschriebenen Verfahrens werden opake Kunststofffolien, insbesondere sowohl Flachfolien als auch Schlauch- und Halbschlauchfolien, jeweils mit Gesamtschichtdicken von 50 µm, 80 µm, 120 µm und 150 µm mit der in Tabelle 4 beschriebenen Zusammensetzung hergestellt. In diesem Zusammenhang sind die erste äußere Folienschicht und die Trägerfolienschicht weiß ausgebildet und die zweite äußere Folienschicht ist schwarz ausgebildet, wobei die zweite äußere Folienschicht die Innenseite im Falle der Schlauch- und Halbschlauchfolien darstellt. Die Kunststofffolien weisen jeweils ein Verhältnis der Schichtdicken von erster äußerer Folienschicht / Trägerfolienschicht / zweiter äußerer Folienschicht von 28 : 50 : 22 auf.

**Tabelle 4: Zusammensetzung der jeweiligen Schichten von erfindungsgemäßen weiß/weiß/schwarz Flach-, Schlauch- und Halbschlauchfolien**

| **Rohstoff** | **erste äußere Folienschicht** | **Trägerfolienschicht** | **zweite äußere Folienschicht** |
|---|---|---|---|
| **PE-Rezyklat** | 93,0 % | 88,0 % | 88,0 % |
| **weiß 8750 ES** | 5,0 % | 10,0 % | - |
| **schwarz 2723** | - | - | 10,0 % |
| **UV-Stabilisator** | 2,0 % | 2,0 % | 2,0 % |

### Mechanische und optische Eigenschaften

Die mechanischen Eigenschaften, insbesondere die Zugfestigkeit in Längs- und Querrichtung, die Reißdehnung in Längs- und Querrichtung, die dynamische Durchstoßfestigkeit sowie die Reibungskoeffizienten der unbehandelten und der aufgerauhten Folien, der hergestellten Flach-, Schlauch- und Halbschlauchfolien werden getestet. Darüber hinaus wird die Opazität der weiß/weiß/silbern und weiß/weiß/schwarz ausgebildeten Folien gemessen.

In diesem Zusammenhang werden die folgenden Testverfahren zur Messung der Eigenschaften verwendet:
- Zugfestigkeit: Zugversuch gemäß EN ISO 527
- Reißdehnung: Zugversuch gemäß EN ISO 527
- Dynamische Durchstoßfestigkeit: *Dart-Drop Test* gemäß ASTM D 1709
- Reibungskoeffizienten: Reibungsversuch an Metall gemäß DIN 53375, wobei das gegebenenfalls notwendige Aufrauhen der Folien mittels Koronabehandlung erfolgt
- Transparenz: Lichtdurchlässigkeit gemäß DIN EN ISO 13468
- Opazität: Blickdichtigkeitsmessung gemäß DIN 53146

Alle hergestellten Flach-, Schlauch- und Halbschlauchfolien erfüllen die im Folgenden spezifizierten, für die Verwendung als Verpackungsfolie notwendigen Mindestanforderungen:

| Mechanische Eigenschaft | Mindestanforderungen |
|---|---|
| Zugfestigkeit in Längsrichtung | 19 N/mm² |
| Zugfestigkeit in Querrichtung | 17 N/mm2 |
| Reißdehnung in Längsrichtung | 200 % |
| Reißdehnung in Querrichtung | 250 % |
| dynamische Durchstoßfestigkeit | 1,7 g/µm |
| Transparenz (nur bei transparenten Folien) | 85 % |
| Opazität (nur bei opaken Folien) | 96 % |

Darüber hinaus weisen die hergestellten und unbehandelten Flach-, Schlauch- und Halbschlauchfolien, entsprechend den Anforderungen für die Verwendung als Verpackungsfolie, einen Reibungskoeffizienten auf Metall von maximal 0,45 auf. Weiterhin weisen die hergestellten Flach-, Schlauch- und Halbschlauchfolien nach einer Koronabehandlung, entsprechend den Anforderungen für die Verwendung als Verpackungsfolie, einen Reibungskoeffizienten auf Metall von maximal 0,45 auf.

Insgesamt erfüllen somit alle hergestellten und erfindungsgemäßen Kunststofffolie die Anforderungen für die Verwendung als oder in Verpackungsmaterial. Weiterhin weisen alle Kunststofffolien einen Kunststoffrezyklat-Anteil von über 80 Gew.-%, bezogen auf die Kunststofffolie, auf.

Trotz der Verwendung eines hohen Kunststoffrezyklat-Anteils von über 80 Gew.-% resultieren leistungsstarke dreischichtige PE-Koextrusionsfolien, welche den Anforderungen für die Verwendung als Verpackungsfolien genügen.

### Bezugszeichenliste:

- 1: mehrschichte Kunststofffolie
- 1a: erste äußere Folienschicht
- 1b: Trägerfolienschicht
- 1c: zweite äußere Folienschicht

## Patentansprüche

1. Mehrschichtige Kunststofffolie (1), insbesondere mehrschichtige Kunststoffverbundfolie, auf Basis von Kunststoffrezyklat (Recyclingkunststoff),
wobei die Kunststofffolie (1) einen Schichtverbund von mindestens drei miteinander verbundenen, insbesondere mittels Koextrusion verbundenen und/oder koextrudierten, Folienschichten (1a, 1b, 1c) umfasst,
wobei die Kunststofffolie (1) und/oder der Schichtverbund eine erste äußere Folienschicht (1a) und eine zweite äußere Folienschicht (1c) und eine zwischen der ersten äußeren Folienschicht (1a) und der zweiten äußeren Folienschicht (1c) angeordnete Trägerfolienschicht (1b) umfasst,
wobei die Kunststofffolie (1) einen Kunststoffrezyklat-Anteil von mindestens 80 Gew.-%, bezogen auf die Kunststofffolie (1), aufweist,
wobei die Kunststofffolie (1) zumindest im Wesentlichen nur eine einzige Kunststoffsorte gemäß DIN EN ISO 11469 aufweist, wobei die Kunststoffsorte mit einer Sortenreinheit von mindestens 90 Gew.-% vorliegt,
wobei das Verhältnis der Schichtdicken von erster äußerer Folienschicht (1a) / Trägerfolienschicht (1b) / zweiter äußerer Folienschicht (1c) im Bereich von 10 - 35 : 40 - 60 : 10 - 35 variiert,
wobei mindestens zwei der Folienschichten (1a, 1b, 1c) jeweils unterschiedliche mechanische Eigenschaften aufweisen.

2. Mehrschichtige Kunststofffolie nach Anspruch 1,
wobei die unterschiedlichen mechanischen Eigenschaften von mindestens zwei der Folienschichten (1a, 1b, 1c) ausgewählt sind aus unterschiedlichen Zugfestigkeiten in Längs- und/oder Querrichtung und/oder unterschiedlichen Reißdehnungen in Längs- und/oder Querrichtung und/oder unterschiedlichen dynamische Durchstoßfestigkeiten und/oder unterschiedlichen Reibungskoeffizienten.

3. Mehrschichtige Kunststofffolie nach Anspruch 1 oder Anspruch 2,
wobei die Kunststofffolie (1) außer dem Kunststoffrezyklat zumindest im Wesentlichen nur Inhaltsstoffe aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Primärkunststoffen der gleichen Kunststoffsorte gemäß DIN EN ISO 11469 wie das Kunststoffrezyklat, Hilfsstoffen und Additiven sowie deren Mischungen und Kombinationen aufweist.

4. Mehrschichtige Kunststofffolie nach einem der vorangehenden Ansprüche,
wobei die Kunststofffolie (1) einen (Gesamt-)Kunststoffanteil im Bereich von 80 Gew.-% bis 99,9 Gew.-%, insbesondere im Bereich von 82,5 Gew.-% bis 99,8 Gew.-%, vorzugsweise im Bereich von 85 Gew.-% bis 99,8 Gew.-%, bezogen auf die Kunststofffolie (1), aufweist.

5. Mehrschichtige Kunststofffolie nach einem der vorangehenden Ansprüche,
wobei die Kunststofffolie (1) Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Hilfsstoffen und Additiven sowie deren Mischungen und Kombinationen, in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%, bezogen auf die Kunststofffolie (1), aufweist.

6. Mehrschichtige Kunststofffolie nach einem der vorangehenden Ansprüche,
wobei die Kunststofffolie (1) aufweist oder hieraus besteht, wobei die nachfolgenden Gewichtsprozentangaben jeweils auf die Kunststofffolie (1) bezogen sind und derart zu kombinieren und/oder auszuwählen sind, dass 100 Gew.-% resultieren:
- Kunststoffrezyklat in Mengen im Bereich von 80 Gew.-% bis 97 Gew.-%, insbesondere in Mengen im Bereich von 82 Gew.-% bis 96 Gew.-%, vorzugsweise in Mengen im Bereich von 84 Gew.-% bis 95 Gew.-%;
- gegebenenfalls Primärkunststoff(e) der gleichen Kunststoffsorte gemäß DIN EN ISO 11469 wie das Kunststoffrezyklat, insbesondere in Mengen im Bereich von 0,1 Gew.-% bis 15 Gew.-%, vorzugsweise in Mengen im Bereich von 0,5 Gew.-% bis 10 Gew.-%, bevorzugt in Mengen im Bereich von 1 Gew.-% bis 9 Gew.-%;
- Inhaltsstoffe, ausgewählt aus der Gruppe von Füllstoffen, Farbstoffen, Farbpigmenten, Duftstoffen, Antiblockmitteln, Gleitmitteln, Stabilisatoren, Plastifizierungsmitteln und Weichmachern, Bindemitteln, Hilfsstoffen und Additiven sowie deren Mischungen und Kombinationen, in Mengen im Bereich von 0,1 Gew.-% bis 20 Gew.-%, insbesondere im Bereich von 0,2 Gew.-% bis 17,5 Gew.-%, vorzugsweise im Bereich von 0,2 Gew.-% bis 15 Gew.-%.

7. Mehrschichtige Kunststofffolie nach einem der vorangehenden Ansprüche,
wobei die Kunststofffolie (1) eine Schichtdicke im Bereich von 10 µm bis 300 µm, insbesondere im Bereich von 15 µm bis 200 µm, bevorzugt im Bereich von 20 µm bis 180 µm, besonders bevorzugt im Bereich von 25 µm bis 175 µm, aufweist; und/oder
wobei die Kunststofffolie (1) eine Schichtdicke von mindestens 10 µm, insbesondere mindestens 15 µm, bevorzugt mindestens 20 µm, besonders bevorzugt mindestens 25 µm, aufweist; und/oder
wobei die Kunststofffolie (1) eine Schichtdicke von bis zu 300 µm, insbesondere bis zu 200 µm, bevorzugt bis zu 180 µm, besonders bevorzugt bis zu 175 µm, aufweist; und/oder
wobei die Schichtdicke der Trägerfolienschicht (1b) 35 % bis 65 %, insbesondere 40 % bis 60 %, bevorzugt 45 % bis 55 %, besonders bevorzugt etwa 50 %, der (Gesamt-) Schichtdicke der Kunststofffolie (1) beträgt; und/oder
wobei die (summierten) Schichtdicken der äußeren Folienschichten (1a, 1c) 35 % bis 65 %, insbesondere 40 % der 60 %, bevorzugt 45 % bis 55 %, besonders bevorzugt etwa 50 %, der (Gesamt-)Schichtdicke der Kunststofffolie (1) beträgt; und/oder
wobei das Verhältnis der Schichtdicken von erster äußerer Folienschicht (1a) / Trägerfolienschicht (1b) / zweiter äußerer Folienschicht (1c) im Bereich von 15 - 30 : 45 - 55 : 15 - 30 variiert; und/oder
wobei die Folienschichten (1a, 1b, 1c) jeweils einen Kunststoffrezyklat-Anteil von mindestens 80 Gew.-%, bezogen auf die jeweilige Folienschicht (1a, 1b, 1c), aufweisen.

8. Mehrschichtige Kunststofffolie nach einem der vorangehenden Ansprüche,
wobei die Folienschichten (1a, 1b, 1c) jeweils ein Kunststoffrezyklat auf Basis von Polyethylen (PE-Rezyklat) aufweisen, wobei die Folienschichten (1a, 1b, 1c) jeweils einen Kunststoffrezyklat-Anteil von mindestens 80 Gew.-%, bezogen auf die jeweilige Folienschicht (1a, 1b, 1c), aufweisen.

9. Mehrschichtige Kunststofffolie nach Anspruch 8,
wobei das Kunststoffrezyklat auf Basis von Polyethylen (PE-Rezyklat) eine (Polyethylen-)Sortenreinheit von mindestens 90 Gew.-%, insbesondere mindestens 95 Gew.-%, bezogen auf das Kunststoffrezyklat auf Basis von Polyethylen, aufweist; und/oder
wobei die Folienschichten (1a, 1b, 1c) zusätzlich Primärpolyethylen (Polyethylen als und/oder in Form von Primärkunststoff) aufweisen insbesondere in Mengen im Bereich von 0,1 Gew.-% bis 15 Gew.-%, insbesondere in Mengen im Bereich von 0,5 Gew.-% bis 10 Gew.-%, vorzugsweise in Mengen im Bereich von 1 Gew.-% bis 9 Gew.-%, bezogen auf die jeweilige Folienschicht (1a, 1b, 1c).

10. Mehrschichtige Kunststofffolie nach einem der vorangehenden Ansprüche,
wobei mindestens zwei der Folienschichten (1a, 1b, 1c) jeweils unterschiedliche optische Eigenschaften, insbesondere unterschiedliche Opazitäten und/oder unterschiedliche Färbungen, aufweisen; und/oder
wobei mindestens zwei der Folienschichten (1a, 1b, 1c) jeweils unterschiedliche Inhaltsstoffe, insbesondere wie zuvor definiert, aufweisen.

11. Mehrschichtige Kunststofffolie (1), insbesondere mehrschichtige Kunststoffverbundfolie, auf Basis von Kunststoffrezyklat (Recyclingkunststoff), nach einem der Ansprüche 1 bis 10,
wobei die Kunststofffolie (1) eine Schichtdicke im Bereich von 10 µm bis 300 µm aufweist,
wobei die Kunststofffolie (1) opak, insbesondere opak in Bezug auf den Wellenlängenbereich des sichtbaren Lichts, ausgebildet ist, insbesondere wobei die opak ausgebildete Kunststofffolie (1) eine Opazität von mindestens 80 %, insbesondere von mindestens 90 %, vorzugsweise von mindestens 95 %, besonders bevorzugt von mindestens 96 %, insbesondere bestimmt gemäß DIN 53146, aufweist;
wobei mindestens zwei Folienschichten (1a, 1b, 1c) der opak und/oder farbig ausgebildeten Kunststofffolie (1) voneinander verschiedene Farben und/oder voneinander verschiedene farbgebende Inhaltsstoffe aufweisen.

12. Mehrschichtige Kunststofffolie (1), insbesondere mehrschichtige Kunststoffverbundfolie, auf Basis von Kunststoffrezyklat (Recyclingkunststoff), nach einem der Ansprüche 1 bis 11,
wobei die Kunststofffolie (1) eine Schichtdicke im Bereich von 10 µm bis 300 µm aufweist,
wobei die erste äußere Folienschicht (1a) und die Trägerfolienschicht (1b) jeweils weiß ausgebildet sind und/oder wobei die erste äußere Folienschicht (1a) und die Trägerfolienschicht (1b) jeweils ein Weißpigment aufweisen und wobei die zweite äußere Folienschicht (1c) metallfarben, insbesondere silberfarben, oder aber schwarz, vorzugsweise silberfarben, ausgebildet ist und/oder wobei die zweite äußere Folienschicht (1c) ein Metalleffektpigment, insbesondere Silberfarbenpigment, oder aber ein Schwarzpigment, bevorzugt ein anorganisches Metalleffektpigment, insbesondere anorganisches Silberfarbenpigment, oder aber ein anorganisches Schwarzpigment, besonders bevorzugt ein Metalleffektpigment, aufweist.

13. Mehrschichtige Kunststofffolie (1), insbesondere mehrschichtige Kunststoffverbundfolie, auf Basis von Kunststoffrezyklat (Recyclingkunststoff), nach einem der Ansprüche 1 bis 10,
wobei die Kunststofffolie (1) eine Schichtdicke im Bereich von 10 µm bis 300 µm aufweist,
wobei die Kunststofffolie (1) transparent, insbesondere transparent in Bezug auf den Wellenlängenbereich des sichtbaren Lichts, ausgebildet ist, insbesondere wobei die transparent ausgebildete Kunststofffolie (1) eine Transparenz von mindestens 70 %, insbesondere von mindestens 75 %, vorzugsweise von mindestens 80 %, besonders bevorzugt von mindestens 85 %, ganz besonders bevorzugt von mindestens 90 %, noch mehr bevorzugt von mindestens 95 %, insbesondere bestimmt gemäß DIN EN ISO 13468, aufweist und/oder insbesondere wobei die transparent ausgebildete Kunststofffolie (1) eine Opazität von höchstens 30 %, insbesondere von höchstens 25 %, vorzugsweise von höchstens 20 %, besonders bevorzugt von höchstens 15 %, ganz besonders bevorzugt von höchstens 10 %, noch mehr bevorzugt von höchstens 5 %, insbesondere bestimmt gemäß DIN 53146, aufweist.

14. Verwendung einer mehrschichtigen Kunststofffolie gemäß einem der vorangehenden Ansprüche zur Herstellung von Verpackungsmaterial und/oder als Verpackungsmaterial;
insbesondere wobei die Kunststofffolie in Form einer Flachfolie, Schlauchfolie oder Halbschlauchfolie verwendet wird; und/oder
insbesondere wobei die Kunststofffolie in Form von Umverpackungen, Schläuchen, Beuteln oder Tüten verwendet wird; und/oder
insbesondere wobei die Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Haushaltsgütern und Haushaltswaren, oder aber für Hygieneanwendungen verwendet wird; und/oder
insbesondere wobei die Kunststofffolie zu Verpackungszwecken und/oder als Verpackungsmaterial im Nichtlebensmittelbereich (Non-Food-Bereich) verwendet wird.

15. Verpackungsmaterial, umfassend mindestens eine mehrschichtige Kunststofffolie gemäß einem der vorangehenden Ansprüche;
insbesondere wobei das Verpackungsmaterial und/oder die Kunststofffolie in Form einer Flachfolie, Schlauchfolie oder Halbschlauchfolie ausgebildet ist/sind; und/oder
insbesondere wobei das Verpackungsmaterial und/oder die Kunststofffolie in Form von Umverpackungen, Schläuchen, Beuteln oder Tüten ausgebildet ist/sind; und/oder insbesondere wobei das Verpackungsmaterial und/oder die Kunststofffolie für die Verpackung von Schüttgütern, insbesondere ausgewählt aus der Gruppe von (Pflanz-)Erden, Düngern, Mulch, Humus, Waschmitteln, Klebstoffen, Pellets, Granulaten, Haushaltsgütern und Haushaltswaren, oder aber für Hygieneanwendungen ausgebildet ist/sind; und/oder
insbesondere wobei das Verpackungsmaterial und/oder die Kunststofffolie zur Verpackungszwecken und/oder als Verpackungsmaterial im Nichtlebensmittelbereich (Non-Food-Bereich) ausgebildet ist/sind.

## Claims

1. Multilayer plastic film (1), in particular multilayer plastic composite film, based on plastic recyclate (recycled plastic),
wherein the plastic film (1) comprises a layered composite of at least three film layers (1a, 1b, 1c) bonded to one another, in particular bonded and/or coextruded by means of coextrusion,
wherein the plastic film (1) and/or the layer composite comprises a first outer film layer (1a) and a second outer film layer (1c) and a carrier film layer (1b) arranged between the first outer film layer (1a) and the second outer film layer (1c),
wherein the plastic film (1) has a plastic recyclate content of at least 80 wt.% (% by weight), based on the plastic film (1),
wherein the plastic film (1) comprises at least substantially only one single plastic grade according to DIN EN ISO 11469, said plastic grade having a grade purity of at least 90 wt.%,
wherein the ratio of the layer thicknesses of first outer film layer (1a) / carrier film layer (1b) / second outer film layer (1c) varies in the range of 10 - 35 : 40 - 60 : 10 - 35,
with at least two of the film layers (1a, 1b, 1c) each having different mechanical properties.

2. Multilayer plastic film according to claim 1,
wherein the different mechanical properties of at least two of the film layers (1a, 1b, 1c) are selected from different tensile strengths in the longitudinal and/or transverse direction and/or different elongations at break in the longitudinal and/or transverse direction and/or different dynamic puncture strengths and/or different coefficients of friction.

3. Multilayer plastic film according to claim 1 or claim 2,
wherein the plastic film (1), in addition to the plastic recyclate, comprises at least substantially only ingredients from the group of fillers, colorants, color pigments, fragrances, antiblocking agents, lubricants, stabilizers, plasticizers and plasticizers, binders, primary plastics of the same plastic grade according to DIN EN ISO 11469 as the plastic recyclate, auxiliary substances and additives as well as mixtures and combinations thereof.

4. Multilayer plastic film according to one of the preceding claims,
wherein the plastic film (1) has a (total) plastic content in the range from 80 wt.% to 99.9 wt.%, in particular in the range from 82.5 wt.% to 99.8 wt.%, preferably in the range from 85 wt.% to 99.8 wt.%, based on the plastic film (1).

5. Multilayer plastic film according to any one of the preceding claims,
wherein the plastic film (1) comprises ingredients selected from the group of fillers, dyes, color pigments, fragrances, antiblocking agents, lubricants, stabilizers, plasticizers and plasticizers, binders, auxiliaries and additives as well as mixtures and combinations thereof, in amounts in the range from 0.1 wt.% to 20 wt.%, in particular in the range from 0.1 wt.% to 20 wt.%, in particular in the range from 0.2 wt.% to 17.5 wt.%, preferably in the range from 0.2 wt.% to 15 wt.%, based on the plastic film (1).

6. Multilayer plastic film according to any one of the preceding claims,
wherein the plastic film (1) comprises or consists of, wherein the following weight percentages are each related to the plastic film (1) and are to be combined and/or selected in such a way that 100 wt.% results:
- plastic recyclate in amounts in the range from 80 wt.% to 97 wt.%, in particular in amounts in the range from 82 wt.% to 96 wt.%, preferably in amounts in the range from 84 wt.% to 95 wt.%;
- optionally primary plastic(s) of the same type of plastic according to DIN EN ISO 11469 as the plastic recyclate, in particular in amounts in the range from 0.1 wt.% to 15 wt.%, preferably in amounts in the range from 0.5 wt.% to 10 wt.%, preferably in amounts in the range from 1 wt.% to 9 wt.%;
- ingredients selected from the group consisting of fillers, colorants, color pigments, fragrances, antiblocking agents, slip agents, stabilizers, plasticizers and plasticizers, binders, auxiliaries and additives and mixtures and combinations thereof, in amounts in the range from 0.1 wt.% to 20 wt.%, in particular in the range from 0.2 wt.% to 17.5 wt.%, preferably in the range from 0.2 wt.% to 15 wt.%.

7. Multilayer plastic film according to one of the preceding claims,
wherein the plastic film (1) has a layer thickness in the range from 10 µm to 300 µm, in particular in the range from 15 µm to 200 µm, preferably in the range from 20 µm to 180 µm, particularly preferably in the range from 25 µm to 175 µm; and/or
wherein the plastic film (1) has a layer thickness of at least 10 µm, in particular at least 15 µm, preferably at least 20 µm, particularly preferably at least 25 µm; and/or
wherein the plastic film (1) has a layer thickness of up to 300 µm, in particular up to 200 µm, preferably up to 180 µm, particularly preferably up to 175 µm; and/or
wherein the layer thickness of the carrier film layer (1b) is 35 % to 65 %, in particular 40 % to 60 %, preferably 45 % to 55 %, particularly preferably about 50 %, of the (total) layer thickness of the plastic film (1); and/or
wherein the (summed) layer thicknesses of the outer film layers (1a, 1c) is 35 % to 65 %, in particular 40 % to 60 %, preferably 45 % to 55 %, particularly preferably about 50 %, of the (total) layer thickness of the plastic film (1); and/or
wherein the ratio of the layer thicknesses of first outer film layer (1a) / carrier film layer (1b) / second outer film layer (1c) varies in the range of 15 30 : 45 - 55 : 15 - 30; and/or
the film layers (1a, 1b, 1c) each having a plastic recyclate content of at least 80 wt.%, based on the respective film layer (1a, 1b, 1c).

8. Multilayer plastic film according to one of the preceding claims,
wherein the film layers (1a, 1b, 1c) each comprise a plastic recyclate based on polyethylene (PE recyclate), wherein the film layers (1a, 1b, 1c) each have a plastic recyclate content of at least 80 wt.%, based on the respective film layer (1a, 1b, 1c).

9. Multilayer plastic film according to claim 8,
wherein the plastic recyclate based on polyethylene (PE recyclate) has a (polyethylene)grade purity of at least 90 wt.%, in particular at least 95 wt.%, based on the plastic recyclate based on polyethylene; and/or
the film layers (1a, 1b, 1c) additionally comprising primary polyethylene (polyethylene as and/or in the form of primary plastic), in particular in amounts in the range from 0.1 wt.% to 15 wt.%, in particular in amounts in the range from 0.5 wt.% to 10 wt.%, preferably in amounts in the range from 1 wt.% to 9 wt.%, based on the respective film layer (1a, 1b, 1c).

10. Multilayer plastic film according to any one of the preceding claims,
wherein at least two of the film layers (1a, 1b, 1c) each have different optical properties, in particular different opacities and/or different colorations; and/or
wherein at least two of the film layers (1a, 1b, 1c) each have different ingredients, in particular as defined above.

11. Multilayer plastic film (1), in particular multilayer plastic composite film, based on plastic recyclate (recycled plastic) according to any one of claims 1 to 10,
wherein the plastic film (1) has a layer thickness in the range of 10 µm to 300 µm,
wherein the plastic film (1) is opaque, in particular opaque with respect to the wavelength range of visible light, in particular wherein the opaque plastic film (1) has an opacity of at least 80 %, in particular of at least 90 %, preferably of at least 95 %, particularly preferably of at least 96 %, in particular determined in accordance with DIN 53146;
wherein at least two film layers (1a, 1b, 1c) of the opaque and/or colored plastic film (1) have mutually different colors and/or mutually different coloring ingredients.

12. Multilayer plastic film (1), in particular multilayer plastic composite film, based on plastic recyclate (recycled plastic) according to one of claims 1 to 11,
wherein the plastic film (1) has a layer thickness in the range of 10 µm to 300 µm,
wherein the first outer film layer (1a) and the carrier film layer (1b) are each formed white and/or wherein the first outer film layer (1a) and the carrier film layer (1b) each comprise a white pigment and wherein the second outer film layer (1c) is formed metal-colored, in particular silver-colored, or else black, preferably silver-colored, and/or wherein the second outer film layer (1c) comprises a metal effect pigment, in particular silver color pigment, or else a black pigment, preferably an inorganic metal effect pigment, in particular inorganic silver color pigment, or else an inorganic black pigment, particularly preferably a metal effect pigment.

13. Multilayer plastic film (1), in particular multilayer plastic composite film, based on plastic recyclate (recycled plastic) according to one of claims 1 to 10,
wherein the plastic film (1) has a layer thickness in the range of 10 µm to 300 µm,
wherein the plastic film (1) is transparent, in particular transparent with respect to the wavelength range of visible light, in particular wherein the transparent plastic film (1) has a transparency of at least 70 %, in particular of at least 75 %, preferably of at least 80 %, particularly preferably of at least 85 %, very particularly preferably of at least 90 %, even more preferably of at least 95 %, in particular determined in accordance with DIN EN ISO 13468, and/or in particular wherein the transparent plastic film (1) has an opacity of at most 30 %, in particular of at most 25 %, preferably of at most 20 %, particularly preferably of at most 15 %, very particularly preferably of at most 10 %, still more preferably of at most 5 %, in particular determined in accordance with DIN 53146.

14. Use of a multilayer plastic film according to one of the preceding claims for the production of packaging material and/or as packaging material;
in particular wherein the plastic film is used in the form of a flat film, tubular film or semi-tubular film; and/or
in particular wherein the plastic film is used in the form of outer packaging, tubes, bags or sachets; and/or
in particular wherein the plastic film is used for packaging bulk goods, in particular selected from the group of (plant) soils, fertilizers, mulch, humus, detergents, adhesives, pellets, granulates, household goods and household products, or else for hygiene applications; and/or
in particular wherein the plastic film is used for packaging purposes and/or as packaging material in the non-food sector.

15. Packaging material comprising at least one multilayer plastic film according to any one of the preceding claims;
in particular wherein the packaging material and/or the plastic film is/are in the form of a flat film, tubular film or semi-tubular film; and/or
in particular wherein the packaging material and/or the plastic film is/are in the form of outer packaging, tubes, bags or sachets; and/or
in particular wherein the packaging material and/or the plastic film is/are designed for packaging bulk goods, in particular selected from the group of (plant) soils, fertilizers, mulch, humus, detergents, adhesives, pellets, granulates, household goods and household products, or else for hygiene applications; and/or
in particular wherein the packaging material and/or the plastic film is/are designed for packaging purposes and/or as packaging material in the non-food sector.

## Revendications

1. Film plastique multicouche (1), en particulier film plastique composite multicouche, à base de matière plastique recyclée (plastique recyclé),
où le film plastique (1) comprend un composite stratifié d'au moins trois couches de film (1a, 1b, 1c) reliées entre elles, en particulier reliées et/ou coextrudées par coextrusion,
le film plastique (1) et/ou l'ensemble de couches comprenant une première couche de film extérieure (1a) et une deuxième couche de film extérieure (1c) et une couche de film support (1b) disposée entre la première couche de film extérieure (1a) et la deuxième couche de film extérieure (1c),
le film plastique (1) présentant une proportion de matière plastique recyclée d'au moins 80 % en poids, par rapport au film plastique (1),
le film plastique (1) ne présentant au moins essentiellement qu'une seule sorte de plastique selon la norme DIN EN ISO 11469, la sorte de plastique étant présente avec une pureté de sorte d'au moins 90 % en poids,
le rapport des épaisseurs de couche de la première couche de film extérieure (1a) / la couche de film support (1b) / la deuxième couche de film extérieure (1c) variant dans la plage de 10 - 35 : 40 - 60 : 10 - 35,
au moins deux des couches de film (1a, 1b, 1c) présentant respectivement des propriétés mécaniques différentes.

2. Film plastique multicouche selon la revendication 1,
les différentes propriétés mécaniques d'au moins deux des couches de film (1a, 1b, 1c) étant choisies parmi différentes résistances à la traction dans le sens longitudinal et/ou transversal et/ou différents allongements à la rupture dans le sens longitudinal et/ou transversal et/ou différentes résistances au poinçonnement dynamique et/ou différents coefficients de frottement.

3. Film plastique multicouche selon la revendication 1 ou la revendication 2,
le film plastique (1) ne contenant, outre le recyclat de plastique, au moins essentiellement que des ingrédients du groupe des charges, colorants, pigments colorés, parfums, agents anti-blocage, lubrifiants, stabilisateurs, plastifiants et plastifiants, liants, plastiques primaires du même type de plastique selon la norme DIN EN ISO 11469 que le recyclat de plastique, adjuvants et additifs ainsi que leurs mélanges et combinaisons.

4. Film plastique multicouche selon l'une des revendications précédentes,
où le film plastique (1) présente une teneur (totale) en matière plastique dans la plage de 80 % à 99,9 % en poids, en particulier dans la plage de 82,5 % à 99,8 % en poids, de préférence dans la plage de 85 % à 99,8 % en poids, par rapport au film plastique (1).

5. Film plastique multicouche selon l'une des revendications précédentes,
où le film plastique (1) contient des ingrédients choisis dans le groupe des charges, colorants, pigments colorés, parfums, agents anti-blocage, lubrifiants, stabilisants, plastifiants et plastifiants, liants, adjuvants et additifs ainsi que leurs mélanges et combinaisons, en quantités comprises entre 0,1 % et 20 % en poids. %, en particulier dans la plage de 0,2 % en poids à 17,5 % en poids, de préférence dans la plage de 0,2 % en poids à 15 % en poids, par rapport au film plastique (1).

6. Film plastique multicouche selon l'une quelconque des revendications précédentes, où le film plastique (1) présente ou est constitué de, les indications de pourcentage en poids suivantes se rapportant à chaque fois au film plastique (1) et devant être combinées et/ou sélectionnées de telle sorte qu'il en résulte 100 % en poids :
- recyclat de plastique en quantités de l'ordre de 80 % à 97 % en poids, en particulier en quantités de l'ordre de 82 % à 96 % en poids, de préférence en quantités de l'ordre de 84 % à 95 % en poids;
- le cas échéant, matière(s) plastique(s) primaire(s) de la même sorte de matière plastique selon la norme DIN EN ISO 11469 que le recyclat de matière plastique, en particulier en quantités de l'ordre de 0,1 % en poids à 15 % en poids, de préférence en quantités de l'ordre de 0,5 % en poids à 10 % en poids, de préférence en quantités de l'ordre de 1 % en poids à 9 % en poids;
- ingrédients choisis dans le groupe des charges, colorants, pigments colorés, parfums, agents anti-blocage, lubrifiants, stabilisateurs, plastifiants et plastifiants, liants, adjuvants et additifs ainsi que leurs mélanges et combinaisons, en quantités comprises entre 0,1 % et 20 % en poids, en particulier entre 0,2 % et 17,5 % en poids, de préférence entre 0,2 % et 15 % en poids.

7. Film plastique multicouche selon l'une quelconque des revendications précédentes,
où le film plastique (1) présente une épaisseur de couche dans la plage de 10 µm à 300 µm, en particulier dans la plage de 15 µm à 200 µm, de préférence dans la plage de 20 µm à 180 µm, de manière particulièrement préférée dans la plage de 25 µm à 175 µm; et/ou
où le film plastique (1) présente une épaisseur de couche d'au moins 10 µm, en particulier d'au moins 15 µm, de préférence d'au moins 20 µm, de manière particulièrement préférée d'au moins 25 µm; et/ou
où le film plastique (1) présente une épaisseur de couche allant jusqu'à 300 µm, en particulier jusqu'à 200 µm, de préférence jusqu'à 180 µm, de manière particulièrement préférée jusqu'à 175 µm; et/ou
où l'épaisseur de la couche de film support (1b) représente 35 % à 65 %, en particulier 40 % à 60 %, de préférence 45 % à 55 %, de manière particulièrement préférée environ 50 %, de l'épaisseur (totale) du film plastique (1); et/ou
où les épaisseurs de couche (cumulées) des couches de film extérieures (1a, 1c) représentent 35 % à 65 %, en particulier 40 % à 60 %, de préférence 45 % à 55 %, de manière particulièrement préférée environ 50 %, de l'épaisseur de couche (totale) du film plastique (1); et/ou
où le rapport des épaisseurs de couche de la première couche de film extérieure (1a) / de la couche de film de support (1b) / de la deuxième couche de film extérieure (1c) varie dans la plage de 15 30 : 45 - 55 : 15 - 30; et/ou
où les couches de film (1a, 1b, 1c) présentent chacune une proportion de matière plastique recyclée d'au moins 80 % en poids, par rapport à la couche de film respective (1a, 1b, 1c).

8. Film plastique multicouche selon l'une des revendications précédentes,
les couches de film (1a, 1b, 1c) présentant chacune un recyclat de plastique à base de polyéthylène (PE recyclé), les couches de film (1a, 1b, 1c) présentant chacune une proportion de recyclat de plastique d'au moins 80 % en poids, par rapport à la couche de film respective (1a, 1b, 1c).

9. Film plastique multicouche selon la revendication 8,
où le recyclat de plastique à base de polyéthylène (PE recyclé) présente une pureté de type (polyéthylène) d'au moins 90 % en poids, en particulier d'au moins 95 % en poids, par rapport au recyclat de plastique à base de polyéthylène; et/ou
où les couches de film (1a, 1b, 1c) présentent en outre du polyéthylène primaire (polyéthylène en tant que et/ou sous forme de matière plastique primaire), en particulier en quantités de l'ordre de 0,1 % en poids à 15 % en poids, en particulier en quantités de l'ordre de 0,5 % en poids à 10 % en poids, de préférence en quantités de l'ordre de 1 % en poids à 9 % en poids, par rapport à la couche de film respective (1a, 1b, 1c).

10. Film plastique multicouche selon l'une des revendications précédentes,
où au moins deux des couches de film (1a, 1b, 1c) présentent chacune des propriétés optiques différentes, en particulier des opacités différentes et/ou des colorations différentes; et/ou
où au moins deux des couches de film (1a, 1b, 1c) présentent respectivement des composants différents, en particulier tels que définis précédemment.

11. Film plastique multicouche (1), en particulier film plastique composite multicouche, à base de plastique recyclé (plastique de recyclage) selon l'une des revendications 1 à 10,
où le film plastique (1) présente une épaisseur de couche dans la plage de 10 µm à 300 µm,
le film plastique (1) étant opaque, en particulier opaque par rapport à la plage de longueurs d'onde de la lumière visible, en particulier le film plastique (1) opaque présentant une opacité d'au moins 80 %, en particulier d'au moins 90 %, de préférence d'au moins 95 %, de manière particulièrement préférée d'au moins 96 %, en particulier déterminée selon DIN 53146;
au moins deux couches (1a, 1b, 1c) du film plastique (1) opaque et/ou coloré présentant des couleurs différentes les unes des autres et/ou des composants colorants différents les uns des autres.

12. Film plastique multicouche (1), en particulier film plastique composite multicouche, à base de plastique recyclé (plastique de recyclage) selon l'une des revendications 1 à 11,
où le film plastique (1) présente une épaisseur de couche dans la plage de 10 µm à 300 µm,
la première couche de film extérieure (1a) et la couche de film support (1b) étant chacune de couleur blanche et/ou la première couche de film extérieure (1a) et la couche de film support (1b) comportant chacune un pigment blanc et la deuxième couche de film extérieure (1c) étant de couleur métallique, en particulier de couleur argentée, ou noire, de préférence de couleur argentée, et/ou la deuxième couche de film extérieure (1c) présentant un pigment à effet métallique, en particulier un pigment de couleur argentée, ou un pigment noir, de préférence un pigment à effet métallique inorganique, en particulier un pigment de couleur argentée inorganique, ou un pigment noir inorganique, de manière particulièrement préférée un pigment à effet métallique.

13. Film plastique multicouche (1), en particulier film plastique composite multicouche, à base de plastique recyclé (plastique de recyclage) selon l'une des revendications 1 à 10,
le film plastique (1) présente une épaisseur de couche dans la plage de 10 µm à 300 µm,
le film plastique (1) étant transparent, en particulier transparent par rapport à la plage de longueurs d'onde de la lumière visible, en particulier le film plastique (1) transparent ayant une transparence d'au moins 70 %, en particulier d'au moins 75 %, de préférence d'au moins 80 %, de manière particulièrement préférée d'au moins 85 %, de manière tout à fait préférée d'au moins 90 %, de manière encore plus préférée d'au moins 95 %, en particulier déterminé selon la norme DIN EN ISO 13468, et/ou en particulier dans lequel le film plastique (1) réalisé de manière transparente présente une opacité de 30 % au maximum, en particulier de 25 % au maximum, de préférence de 20 % au maximum, de manière particulièrement préférée de 15 % au maximum, de manière tout à fait préférée de 10 % au maximum, de manière encore plus préférée de 5 % au maximum, déterminée en particulier selon la norme DIN 53146.

14. Utilisation d'un film plastique multicouche selon l'une des revendications précédentes pour la fabrication de matériau d'emballage et/ou comme matériau d'emballage;
en particulier où le film plastique est utilisé sous la forme d'un film plat, d'un film tubulaire ou d'un film semi-tubulaire; et/ou
en particulier où le film plastique est utilisé sous la forme de suremballages, de tubes, de sachets ou de sacs; et/ou
en particulier où le film plastique est utilisé pour l'emballage de produits en vrac, notamment choisis dans le groupe des terreaux (de plantation), des engrais, du paillis, de l'humus, des détergents, des colles, des granulés, des produits ménagers et des articles de ménage, ou encore pour des applications hygiéniques; et/ou
en particulier où le film plastique est utilisé à des fins d'emballage et/ou comme matériau d'emballage dans le domaine non-alimentaire.

15. Matériau d'emballage comprenant au moins un film plastique multicouche selon l'une quelconque des revendications précédentes;
en particulier où le matériau d'emballage et/ou le film plastique se présente(nt) sous la forme d'un film plat, d'un film tubulaire ou d'un film semi-tubulaire; et/ou
en particulier où le matériau d'emballage et/ou le film plastique se présente(nt) sous la forme d'un suremballage, d'un tube, d'un sac ou d'un sachet; et/ou
en particulier où le matériau d'emballage et/ou le film plastique est/sont conçu(s) pour l'emballage de produits en vrac, en particulier choisis dans le groupe des terreaux (pour plantes), des engrais, du paillis, de l'humus, des détergents, des colles, des granulés, des produits ménagers et des articles de ménage, ou encore pour des applications hygiéniques; et/ou
en particulier où le matériau d'emballage et/ou le film plastique est/sont conçu(s) à des fins d'emballage et/ou comme matériau d'emballage dans le domaine non-alimentaire.
